# EUROPÄISCHE PATENTSCHRIFT

(11) **EP 2 938 972 B1**
(45) Veröffentlichungstag und Bekanntmachung des Hinweises auf die Patenterteilung: **31.05.2023**
(21) Anmeldenummer: 13795502.7
(22) Anmeldetag: 26.11.2013
(51) Int. Cl.: G01F 1/84

(54) **MESSWANDLER VOM VIBRATIONSTYP SOWIE DAMIT GEBILDETES MESSSYSTEM**
VIBRATION-TYPE MEASUREMENT TRANSDUCER AND MEASUREMENT SYSTEM FORMED THEREWITH
TRANSDUCTEUR DE TYPE VIBRATOIRE AINSI QUE SYSTÈME DE MESURE FORMÉ AVEC CELUI-CI

(30) Priorität: 30.12.2012 DE 102012025245; 18.03.2013 DE 102013102708
(43) Veröffentlichungstag der Anmeldung: 04.11.2015
(73) Patentinhaber: Endress+Hauser Flowtec AG, 4153 Reinach (BL) (CH)
(72) Erfinder: HUBER, Christof, 3007 Bern (CH); RIEDER, Alfred, 84032 Landshut (DE); SCHÜTZE, Christian, 4055 Basel (CH); BITTO, Ennio, 4147 Aesch (BL) (CH); ANKLIN, Martin Josef, 4143 Dornach (CH)
(74) Vertreter: Hahn, Christian
(86) Internationale Anmeldenummer: PCT/EP2013/074685
(87) Internationale Veröffentlichungsnummer: WO 2014/102036

(56) Entgegenhaltungen:
- EP-A1- 0 598 287
- EP-A1- 1 260 798
- DE-A1- 3 916 285
- DE-A1- 4 027 936
- DE-A1-102004 030 392
- JP-A- H0 341 319
- US-A- 5 691 485

## Beschreibung

Die Erfindung betrifft einen, insb. für ein Coriolis-Massendurchfluß-Meßgerät geeigneten, Meßwandler vom Vibrationstyp sowie ein damit gebildetes Meßsystem, insb. ein Coriolis-Massendurchfluß-Meßgerät.

In der industriellen Meßtechnik werden, insb. auch im Zusammenhang mit der Regelung und Überwachung von automatisierten verfahrenstechnischen Prozessen, zur Ermittlung von Massendurchflußraten und/oder Massendurchflüssen von in einer Prozeßleitung, beispielsweise einer Rohrleitung, strömenden Medien, beispielsweise von Flüssigkeiten und/oder Gasen, oftmals Meßsysteme verwendet, die mittels eines Meßwandlers vom Vibrationstyp und einer daran angeschlossenen, zumeist in einem separaten Elektronik-Gehäuse untergebrachten, Meß- und Betriebselektronik im strömenden Medium Corioliskräfte induzieren und von diesen abgeleitet den Massendurchfluß bzw. die Massendurchflußrate repräsentierende Meßwerte generieren. Derartige - zumeist als unmittelbar in den Verlauf der Prozeßleitung eingesetzte In-Line-Meßgeräte ausgebildete, mithin eine zu einer Nennweite der Rohrleitung gleich große nominelle Nennweite aufweisende - Meßsysteme sind seit langem bekannt und haben sich im industriellen Einsatz bewährt. Beispiele für Meßwandler vom Vibrationstyp bzw. damit gebildete Meßsysteme, sind z.B. in der DE-A 40 27 936, der US-A 2003/0084559, der US-A 2003/0131669, der US-A 2005/0139015, der US-A 46 55 089, US-A 48 01 897, der US-A 48 31 885, der US-A 50 24 104, der US-A 51 29 263, der US-A 52 87 754, der US-A 53 81 697, der US-A 55 31 126, der US-A 57 05 754, der US-A 57 36 653, der US-A 58 04 742, der US-A 60 06 609, der US-A 60 47 457, der US-A 60 82 202, der US-B 62 23 605, der US-A 63 11 136, der US-B 63 60 614, der US-B 65 16 674, der US-B 68 40 109, der US-B 68 51 323, der US-B 70 77 014 oder der WO-A 00/02020 beschrieben. Darin gezeigt ist jeweils ein Meßwandler der zumindest ein bezüglich eines Symmetriezentrums punktsymmetrisches Meßrohr mit einer eine vorgegebene Wanddicke aufweisenden, beispielsweise einer Titan-, Zirkonium- und/oder Tantal-Legierung oder auch aus einem Edelstahl bestehenden, Rohrwand und einem sich zwischen einem einlaßseitigen und einem außlaßseitigen Rohrende des Meßrohrs erstreckenden, von nämlicher Rohrwand umschlossenen Lumen umfaßt. Das, beispielsweise S- bzw. Z-förmig oder gerade ausgebildete, Meßrohr ist in einem, beispielsweise auch als ein das Meßrohr umhüllendes, mithin schutzgebenden Meßwandler-Gehäuse und/oder als ein das Meßrohr zumindest umhüllendes Trägerrohr, ausgebildeten äußeren Trägerelement, beispielsweise aus Edelstahl, schwingfähig gehaltert, nämlich lediglich mit seinem einlaßseitigen Rohrende mit einem korrespondierenden einlaßseitigen Trägerende des Trägerelements und mit seinem außlaßseitigen Rohrende mit einem korrespondierenden außlaßseitigen Trägerende des Trägerelements fest verbunden, ansonsten aber seitlich davon beabstandet. Das äußere Trägerelement ist ferner dafür eingerichtet, direkt, nämlich über jeweils einen an jedem von dessen beiden Trägerenden vorgesehene Anschlußflansch, mit jeweils einem korrespondierenden Leitungssegment der Rohrleitung mechanisch verbunden zu werden, und somit den gesamten Meßwandler in der Rohrleitung zu halten bzw. von der Rohrleitung her eingetragene Kräfte aufzunehmen. Das Meßrohr wiederum mündet mit jedem seiner beiden Rohrenden zwecks Bildung eines die beiden angeschlossenen Leitungssegmente strömungstechnisch verbindenden, nämlich Strömung von einem Leitungssegment durch das Meßrohr hindurch zum anderen Leitungssegment erlaubenden durchgehenden Strömungspfades, in den jeweils korrespondierenden Anschlußflansch.

Das wenigstens eine Meßrohr ist ferner dafür eingerichtet, im Betrieb des Meßsystems in seinem - unter Bildung des erwähnten Strömungspfades mit einem Lumen der angeschlossenen Rohrleitung kommunizierenden - Lumen ein strömendes Medium, beispielsweise ein Gas und/oder eine Flüssigkeit, zu führen und währenddessen zum Erzeugen von als Meßeffekt für die Messung der Massendurchflußrate, mithin des Massendurchflusses, nutzbare Corioliskräften um seine statische Ruhelage schwingen gelassen zu werden. Als Nutzschwingungen, nämlich für das Erzeugen von Corioliskräften geeignete Schwingungen des Meßrohrs, dienen üblicherweise Schwingungen eines dem Meßwandler innewohnende natürlichen Schwingungsmodes, dem sogenannten Antriebs- oder auch Nutzmode, die mit einer momentanen Resonanzfrequenz nämlichen Schwingungsmodes, beispielsweise auch mit praktisch konstant gehaltener Schwingungsamplitude, angeregt werden. Nämliche Nutzschwingungen generieren infolge des durch das im Nutzmode schwingende Meßrohr hindurchströmende Medium Corioliskräfte, die wiederum Coriolisschwingungen, nämlich zusätzliche, zu den Schwingungsbewegungen des Meßrohrs im Nutzmode synchrone, mithin diesen überlagerte Schwingungsbewegungen des Meßrohrs im sogenannten Coriolismode bewirken. Aufgrund solcher Überlagerungen von Nutz- und Coriolismode weisen die mittels der Sensoranordnung einlaßseitig und auslaßseitig erfaßten Schwingungen des vibrierenden Meßrohrs eine auch von der Massendurchflußrate abhängige, meßbare Phasendifferenz auf.

Wie bereits angedeutet wird als Anregungs- oder Nutzfrequenz, nämlich als Frequenz für die angeregten Nutzschwingungen, üblicherweise eine momentane natürliche Resonanzfrequenz der als Nutzmode dienenden Schwingungsform gewählt. Der Nutzmode ist hierbei auch so gewählt, daß nämliche Resonanzfrequenz im besonderen auch von der momentanen Dichte des Mediums abhängig ist. Infolgedessen ist die Nutzfrequenz innerhalb eines mit einer Schwankungsbreite einer Dichte des im Lumen des Meßrohrs strömenden Mediums korrespondierenden Nutzfrequenzintervalls veränderlich, wodurch mittels marktüblicher Coriolis-Massedurchflußmesser neben dem Massedurchfluß zusätzlich auch die Dichte von strömenden Medien gemessen werden kann. Ferner ist es auch möglich, wie u.a. in der eingangs erwähnten US-A 60 06 609 oder US-A 55 31 126 gezeigt, mittels Meßwandlern der in Rede stehenden Art eine Viskosität des hindurchströmenden Mediums direkt zu messen, beispielsweise basierend auf einer für die Anrregung bzw. Aufrechterhaltung der nennenswert auch durch das Medium gedämpften Nutzschwingungen erforderlichen Erregerleistung.

Wie u.a. auch in der US-A 2005/0139015, der US-A 2003/0131669, der US-B 70 77 014, der US-B 6840 109, der US-B 65 16 674, der US-A 60 82 202, der US-A 60 06 609, der US-A 55 31 126, der der US-A 53 81 697, der US-A 52 87 754 oder der WO-A 00/02020 gezeigt, können Meßwandler der in Rede stehenden Art durchaus mittels nur eines einzigen Meßrohrs gebildete sein, derart, daß der jeweilige Meßwandler - etwa im Unterschied auch zu den in der US-A 46 55 089 gezeigten - außer nämlichem Meßrohr kein (weiteres) Rohr aufweist, das dafür eingerichtet ist, in einem Lumen ein strömendes Medium zu führen und währenddessen um eine statische Ruhelage schwingen gelassen zu werden. Wie in der eingangs erwähnten US-B 70 77 014 gezeigt, kann bei Meßwandlern mit einem einzigen punktsymmetrischen Meßrohr u.a. auch ein solcher Schwingungsmode als Nutzmode aktiv angeregt, mithin können solche Schwingungen als Nutzschwingungen gewählt werden, bei denen das Meßrohr jeweils vier Schwingungsknoten, mithin genau drei Schwingungsbäuche aufweisen, wobei - zumindest bei ideal gleichmäßig geformtem Meßrohr mit homogener Wandstärke und homogenen Querschnitt, mithin mit einer gleichermaßen ideal homogenen Steifigkeits- und Massenverteilung - nämliche vier Schwingungsknoten in zumindest einer gedachten Projektionsebene des Meßwandlers auf einer das einlaßseitige und das außlaßseitige Rohrende miteinander imaginär verbindenden gedachten Schwingungsachse liegen bzw. eine solche gedachte Projektionsebene dem Meßwandler innewohnt. Bei Meßwandlern mit geradem Meßrohr entspricht nämliche Projektionsebene praktisch einer das Meßrohr imaginär längs in zwei Hälften schneidenden Schnittebene, mithin ist eine die Nutzschwingungen repräsentierende gedachte Biegelinie nämlichen Meßrohrs komplanar zu dieser Projektionsebene.

Solche - zumeist mit einer im Bereich zwischen 0,5 mm und 100 mm liegenden nominellen Nennweite angebotene - Meßwandlern mit nur einem einzigen Meßrohr, mithin mit nur einem einzigen durchströmten Rohr, sind üblicherweise - etwa auch zur Vermeidung bzw. Minimierung von unerwünschten, nicht zuletzt auch von der Dichte des zu messenden Mediums abhängigen Querkräften bzw. damit einhergehenden Störungen des Meßeffekts - zusätzlich zu dem vorgenannten äußeren Trägerelement mit einem weiteren, inneren, Trägerelement ausgerüstet, das schwingfähig, nämlich lediglich mit einem einlaßseitigen Trägerende und mit einem davon beabstandeten auslaßseitigen Trägerende am Meßrohr fixiert, mithin mit seinem ersten Trägerende auch mit dem ersten Trägerende des äußeren Trägerelements bzw. mit seinem zweiten Trägerende mit dem zweiten Trägerende des äußeren Trägerelements mechanisch gekoppelt ist. Das innere Trägerelement ist dabei ferner so ausgebildet und angeordnet, daß es vom Meßrohr wie auch vom äußeren Trägerelement seitlich beabstandet ist, und daß sowohl das einlaßseitige als auch das auslaßseitige Trägerende des inneren Trägerelements jeweils von beiden Trägerenden des äußeren Trägerelements beabstandet sind. Bei einer solchen Anordnung des inneren Trägerelements am Meßrohr verläuft sowohl zwischen den einlaßseitigen Trägerenden beider Trägerelemente als auch zwischen den außlaßseitigen Trägerenden beider Trägerelemente jeweils ein Bewegungen des jeweils zugehörigen Trägerendes des inneren Trägerelements relativ zu den Trägerenden des äußeren Trägerelements erlaubendes, mithin als jeweils als ein Federelement zwischen beiden Trägerelementen wirkendes freies, beispielsweise auch gerades, Rohrsegment des Meßrohrs. Im Ergebnis dessen wohnt dem Meßwandler auch ein - zumeist eine von der Nutzfrequenz verschiedene Resonanzfrequenz aufweisender - Schwingungsmode inne, in dem das gesamte innere Trägerelement relativ zum äußeren Trägerelement bewegt wird, derart, daß auch dessen beiden Trägerenden relativ zu den beiden Trägerenden des äußeren Trägerelements bewegt werden. Anders gesagt weisen herkömmliche Meßwandler mit nur einem einzigen Meßrohr zumeist ein mittels des Meßrohrs und des daran gehalterten inneren Trägerelements gebildetes Innenteil auf, das - beispielsweise auch ausschließlich - mittels der zwei freien Rohrsegmente in dem äußeren Trägerelement gehaltert sind, und zwar in einer Schwingungen nämlichen Innenteils relativ zum äußeren Trägerelement ermöglichenden Weise. Das zumeist aus einem Stahl, beispielsweise einem Edelstahl oder einem Automatenstahl, bestehende innere Trägerelement ist üblicherweise als ein das Meßrohr zumindest abschnittsweise umhüllender, beispielsweise dazu auch koaxialer, Hohlzylinder oder, wie u.a. in der eingangs erwähnten US-B 70 77 014 oder US-A 52 87 754 gezeigt, etwa auch als Platte, Rahmen oder Kasten ausgebildet und weist zudem auch eine Masse auf, die zumeist größer ist als eine Masse des einzigen Meßrohrs. Wie u.a. in der eingangs erwähnten US-A 55 31 126 gezeigt kann das innere Trägerelement aber auch mittels eines parallel zum Meßrohr verlaufendes, ggf. hinsichtlich Material und Geometrie im wesentlichen dazu auch baugleichen Blindrohrs gebildet sein.

Zum aktiven Anregen der Nutzschwingungen weisen Meßwandler vom Vibrationstyp des weiteren wenigstens einen im Betrieb von einem von der erwähnten Treiberelektronik generierten und entsprechend konditionierten, nämliche eine der Nutzfrequenz entsprechende Signalfrequenz aufweisenden elektrischen Treibersignal, z.B. mit einem geregelten Strom, angesteuerten, zumeist mittig am Meßrohr angreifenden elektro-mechanischen Schwingungserreger auf.

Der - üblicherweise nach Art einer Schwingspule aufgebaute, mithin elektrodynamische - Schwingungserreger weist zumeist eine außen am Meßrohr fixierte, beispielsweise auf dessen Rohrwand angebrachte und mittels eines stabförmigen Permanentmagneten gebildete, erste Erregerkomponente sowie eine dieser gegenüberliegend plazierte, mit nämlicher erster Erregerkomponente wechselwirkende zweite Erregerkomponente auf, und dient dazu, eine mittels des Treibersignals eingespeiste elektrische Leistung in eine entsprechende mechanische Leistung zu wandeln und dadurch die Nutzschwingungen des Meßrohrs bewirkende Erregerkräfte zu generieren. Bei den vorgenannten Meßwandlern mit nur einem einzigen Rohr ist nämliche - zumeist mittels einer Zylinderspule gebildete, mithin mit elektrischen Anschlußleitungen verbundene - zweite Erregerkomponente üblicherweise am erwähnten inneren Trägerelement angebracht, so daß der Schwingungserreger differentiell auf Trägerelement und Meßrohr wirkt infolgedessen das innere Trägerelement im Betrieb Schwingungen ausführen kann, die relativ zum Meßrohr gegengleich, also gleichfrequent und gegenphasig, ausgebildet sind. Wie u.a. in der eingangs erwähnten US-A 55 31 126 vorgeschlagen kann der Schwingungserreger z.B. bei herkömmlichen Meßwandlern vom Vibrationstyp aber auch so ausgebildet sein, daß er differentiell auf das innere und das äußere Trägerelement wirkt, mithin die Nutzschwingungen des Meßrohrs indirekt anregt.

Zum Erfassen von einlaßseitigen und auslaßseitigen Schwingungen des Meßrohrs, nicht zuletzt auch denen mit der Nutzfrequenz, weisen Meßwandler der in Rede stehenden Art ferner zwei zumeist baugleiche, üblicherweise auch nach dem gleichen Wirkprinzip wie der Schwingungserreger arbeitende Schwingungssensoren auf, von denen ein einlaßseitiger Schwingungssensor zwischen dem Schwingungserreger und dem einlaßseitigen Rohrende des Meßrohrs und ein auslaßseitiger Schwingungssensor zwischen dem Schwingungserreger einem außlaßseitigen Rohrende des Meßrohrs plaziert sind. Jeder der, beispielsweise elektro-dynamischen, Schwingungssensoren dient dazu Schwingungsbewegungen des Meßrohrs in ein Schwingungen des Meßrohrs repräsentierendes Schwingungssignal, beispielsweise mit einer von der Nutzfrequenz sowie einer Amplitude der Schwingungsbewegungen abhängigen Meßspannung, zu wandeln. Dafür weist jeder der Schwingungssensoren eine außen am Meßrohr fixierte, beispielsweise mit dessen Rohrwand stoffschlüssig verbundenen und/oder mittels eines Permanentmagneten gebildeten, ersten Sensorkomponente sowie eine dieser gegenüberliegend plazierte, mit nämlicher erster Sensorkomponente wechselwirkende zweite Sensorkomponente auf. Bei den vorgenannten Meßwandlern mit nur einem einzigen Rohr ist nämliche - zumeist mittels einer Zylinderspule gebildete, mithin mit elektrischen Anschlußleitungen verbundene- zweite Sensorkomponente üblicherweise am erwähnten inneren Trägerelement angebracht, derart, daß jeder der Schwingungssensoren Bewegungen des Meßrohrs relativ zum zweiten Trägerelement jeweils differentiell erfaßt.

Bei Meßwandlern der in Rede stehenden Art ist es, wie u.a. auch in der US-A 60 47 457 oder der US-A 2003/0084559 erwähnt, zudem üblich, die am Meßrohr fixierte Erreger- oder die Sensorkomponente jeweils an einem extra dafür auf das jeweilige Meßrohr aufgebrachten ring- oder ringscheibenförmigen metallischen Befestigungselement zu haltern, das das Meßrohr jeweils im wesentlichen entlang einer von dessen gedachten kreisförmigen Umfangslinien fest umspannt. Das jeweilige Befestigungselement kann beispielsweise stoffschlüssig, ewta durch Verlöten, und/oder kraftschlüssig, etwa durch Verpressen von außen, durch hydraulisches Pressen oder Walzen von innerhalb des Meßrohrs oder durch thermisches Aufschrumpfen, am Meßrohr fixiert werden, beispielsweise auch derart, daß nämliches Befestigungselement dauerhaft elastischen oder gemischt plastisch-elastischen Verformungen unterworfen und infolgedessen bezüglich des Meßrohrs permanent radial vorgespannt ist.

Wie u.a. auch in der eingangs erwähnten WO-A 00/02020 diskutiert, besteht ein Nachteil von Meßwandlern mit nur einem einzigen Meßrohr auch darin, daß nämliche Meßwandler im Vergleich zu Meßwandlern mit zwei Meßrohren bei gleicher nomineller Nennweite und vergleichbarer Meßrohrgeometrie zumeist eine erheblich geringere Empfindlichkeit auf die Massendurchflußrate aufweisen, derart, daß - eine jeweils optimale Positionierung der Schwingungssensoren im Sinne einer bestmöglichen Erfassung der Schwingungen des Coriolismodes vorausgesetzt - bei gleichem Medium, gleicher Massendurchflußrate sowie jeweils gleicher in den Schwingungserreger eingespeister elektrischer Erregerleistung eine Amplitude der resultierenden Schwingungsanteile des Coriolismodes, mithin eine Amplitude einer den Coriolismode repräsentierenden Signalkomponente jedes der Schwingungssignale bzw. ein Signal-zu-Rausch-Verhältnis (S/N) nämlicher Signalkomponenten, definiert durch ein Verhältnis einer mittleren Signalleistung der den Coriolismode repräsentierenden Signalkomponente des jeweiligen Schwingungssignals zu einer mittleren Rauschleistung des jeweiligen Schwingungssignals, regelmäßig geringer ausfällt als bei Meßwandlern mit zwei Meßrohren. Dies ist nicht zuletzt darin begründet, daß bei Meßwandlern mit nur einem einzigen Meßrohr allein dieses unmittelbar den vom strömenden Medium induzierten Corioliskräften ausgesetzt ist, während auf das mit dem Meßrohr gekoppelte innere Trägerelement selbst keine darin induzierten Corioliskräfte wirken, umgekehrt aber - bedingt auch durch das in herkömmlichen Meßwandlern zur Anregung der Nutzschwingungen angewendete Wirkprinzip - stets ein nennenswerter Anteil der vom Schwingungserreger bereitgestellten mechanischen Erregerleistung in für die Generierung von Corioliskäften nicht nutzbare Schwingungen nämlichen Trägerelements umgesetzt wird, mithin für die Erzeugung des eigentlichen Meßeffekts notwendig verloren geht; dies im besonderen auch bei der in der eingangs erwähnten US-A 55 31 126 vorgeschlagenen indirekten Anregung der Schwingungen. In diesem Zusammenhang ist als ein weiterer Nachteil von solchen Meßwandlern mit nur einem einzigen Meßrohr gegenüber solchen mit zwei Meßrohren anzusehen, daß die ohnehin geringe Empfindlichkeit auf die Massendurchflußrate zudem regelmäßig auch noch eine Abhängigkeit von der Dichte des Mediums aufweist.

Ausgehend von den vorbeschriebenen, besonders bei aus dem Stand der Technik bekannten Meßwandlern mit nur einem einzigen Meßrohr auftretenden Nachteilen, besteht eine Aufgabe der Erfindung darin, Meßwandler vom Vibrationstyp dahingehend zu verbessern, daß eine Effizienz, mit der die Nutzschwingungen anregbar sind, mithin die Empfindlichkeit solcher Meßwandler auf die Massendurchflußrate erhöht werden.

Zur Lösung der Aufgabe besteht die Erfindung in einem Meßwandler vom Vibrationstyp, insb. für ein Coriolis-Massendurchfluß-Meßgerät, gemäß dem unabhängigen Anspruch 1. Der Meßwandler umfaßt: ein ein einlaßseitiges erstes Rohrende und ein auslaßseitiges zweites Rohrende aufweisendes - beispielsweise bezüglich eines Symmetriezentrums punktsymmetrisches und/oder zumindest abschnittsweise S- bzw. Z-förmig gekrümmtes und/oder zumindest abschnittsweise gerades und/oder einziges - Meßrohr mit einer eine vorgegebene Wanddicke aufweisenden Rohrwand und einem sich zwischen dessen ersten und zweiten Rohrende erstreckenden, von nämlicher Rohrwand umschlossenen Lumen, ein - z.B. zumindest abschnittsweise zylindrisches und/oder als ein das Meßrohr umhüllendes Gehäuse ausgebildetes - erstes Trägerelement, das mit einem ersten Trägerende, insb. starr, mit dem ersten Rohrende des Meßrohrs und mit einem zweiten Trägerende, insb. starr, mit dem zweiten Rohrende des Meßrohrs mechanisch verbunden ist, ein - z.B. mittels eines zum Meßrohr baugleichen und/oder zum Meßrohr zumindest abschnittsweise parallel verlaufenden Blindrohrs gebildetes - vom Meßrohr seitlich beabstandetes zweites Trägerelement, das sowohl mit einem ersten Trägerende als auch mit einem zweiten Trägerende mit dem ersten Trägerelement mechanisch gekoppelt ist, einen - beispielsweise einzigen und/oder elektrodynamischen - Schwingungserreger, sowie wenigstens einen - beispielsweise elektrodynamischen - ersten Schwingungssensor. Das Meßrohr ist dafür eingerichtet, in seinem Lumen ein strömendes Medium - beispielsweise ein Gas und/oder eine Flüssigkeit - zu führen und währenddessen zum Erzeugen von Corioliskräften um eine statische Ruhelage schwingen gelassen zu werden, wobei dem Meßwandler ein eine Resonanzfrequenz aufweisender Nutzmode, nämlich ein Schwingungsmode innewohnt, in dem das Meßrohr Nutzschwingungen, nämlich für das Erzeugen von Corioliskräften geeignete Schwingungen um seine statische Ruhelage mit einer Nutzfrequenz, nämlich einer der Resonanzfrequenz des Nutzmodes entsprechenden Frequenz, ausführen kann -beispielsweise auch derart, daß die Nutzschwingungen des Meßrohrs vier Schwingungsknoten, mithin drei Schwingungsbäuche aufweisen - und wobei der Schwingungserreger dafür eingerichtet ist, nämliche Nutzschwingungen des Meßrohrs anzuregen. Dafür weist nämlicher Schwingungserreger eine außen am Meßrohr fixierte, beispielsweise mit dessen Rohrwand stoffschlüssig verbundenen und/oder mittels eines Permanentmagneten gebildete, erste Erregerkomponente sowie eine am ersten Trägerelement angebrachte, beispielsweise auf einer dem Meßrohr zugewandten Innenseite nämlichen Trägerelements plazierten und/oder mittels einer Zylinderspule gebildete, zweite Erregerkomponente auf. Zudem ist der erste Schwingungssensor des erfindungsgemäßen Meßwandlers dafür eingerichtet, Bewegungen des Meßrohrs relativ zum zweiten Trägerelement zu erfassen, beispielsweise Bewegungen von Schwingungen des Meßrohrs mit Nutzfrequenz, und in ein Schwingungen des Meßrohrs repräsentierendes erstes Schwingungssignal zu wandeln. Dafür weist nämlicher Schwingungssensor eine außen am Meßrohr fixierte - beispielsweise auch mit dessen Rohrwand stoffschlüssig verbundene und/oder mittels eines Permanentmagneten gebildete - erste Sensorkomponente sowie eine am zweiten Trägerelement angebrachte - beispielsweise mittels einer Zylinderspule gebildete - zweite Sensorkomponente auf. Desweiteren umfaßt der Meßwandler: ein sowohl mit dem Meßrohr als auch mit dem ersten Trägerelement mechanisch gekoppeltes, beispielsweise mittels einer Blattfeder gebildetes, Federelement, das dafür eingerichtet ist, infolge einer Bewegung des Meßrohrs relativ zum ersten Trägerelement elastisch verformt zu werden, und/oder ein am zweiten Trägerelement, beispielsweise auf einer vom Meßrohr abgewandten Seite nämlichen Trägerelements, angebrachtes Trimmgewicht.

Darüberhinaus besteht die Erfindung in einem Meßsystem, insb. zum Messen einer Massendurchflußrate und/oder eines Massendurchlfusses eines in einer Rohrleitung strömenden Mediums, das einen solchen Meßwandler sowie eine an nämlichen Meßwandler elektrisch angeschlossene Meß- und Betriebselektronik umfaßt.

Nach einer ersten Ausgestaltung der Erfindung ist vorgesehen, daß der Meßwandler außer dem Schwingungserreger keinen Schwingungserreger mit einer am ersten Trägerelement angebrachten Erregerkomponente aufweist und/oder daß der Meßwandler keinen Schwingungserreger mit einer am zweiten Trägerelement angebrachten Erregerkomponente aufweist.

Nach einer zweiten Ausgestaltung der Erfindung ist vorgesehen, daß das erste Trägerende des zweiten Trägerelements, insb. starr, mit dem ersten Trägerende des ersten Trägerelements und daß das zweite Trägerende des zweiten Trägerelements, insb. starr, mit dem zweiten Trägerende des ersten Trägerelements mechanisch verbunden ist

Nach einer dritten Ausgestaltung der Erfindung ist vorgesehen, daß das erste Trägerelement mittels eines, beispielsweise zumindest abschnittsweise zylindrischen und/oder röhrenförmigen und/oder sowohl das Meßrohr als auch das zweite Trägerelement zumindest teilweise umhüllenden, Hohlkörpers gebildet ist.

Nach einer vierten Ausgestaltung der Erfindung ist vorgesehen, daß das erste Trägerelement ein Lumen aufweist, durch das sich sowohl das Meßrohr als auch das zweite Trägerelement erstrecken.

Nach einer fünften Ausgestaltung der Erfindung ist vorgesehen, daß das erste Trägerelement ein das erste Trägerende bildendes erstes Endstück, ein das zweite Trägerende bildendes zweites Endstück sowie ein sich zwischen den beiden, beispielsweise baugleichen, Endstücken, beispielsweise unter Bildung eines sowohl das Meßrohr als auch das zweite Trägerelement zumindest teilweise umhüllenden Hohlkörpers, erstreckendes, beispielsweise zylindrisches und/oder röhrenförmig, Zwischenstück aufweist.

Nach einer sechsten Ausgestaltung der Erfindung ist vorgesehen, daß das erste Trägerelement eine größte Nachgiebigkeit aufweist, die kleiner als eine größte Nachgiebigkeit des Meßrohrs ist.

Nach einer siebenten Ausgestaltung der Erfindung ist vorgesehen, daß das erste Trägerelement eine größte Nachgiebigkeit aufweist, die kleiner als eine größte Nachgiebigkeit des zweiten Trägerelements ist.

Nach einer achten Ausgestaltung der Erfindung ist vorgesehen, daß das erste Trägerelement mittels eines zylindrischen Rohres mit einer Rohrwand und einem von nämlicher Rohrwand umschlossenen Lumen gebildet ist, beispielsweise derart, daß Meßrohr und zweites Trägerelement jeweils zumindest teilweise innerhalb eines Lumens nämlichen Rohres angeordnet sind, und/oder daß eine Wanddicke der Rohrwand des das erste Trägerelement bildenden Rohres größer als die Wanddicke der Rohrwand des Meßrohrs ist, wobei eine Wanddicke der Rohrwand des das erste Trägerelement bildenden Rohres größer als die Wanddicke der Rohrwand des Meßrohr ist, beispielsweise derart, daß die Wanddicke der Rohrwand des das erste Trägerelement bildenden Rohres mehr als doppelt so groß ist wie die Wanddicke der Rohrwand des Meßrohrs, und/oder daß die Wanddicke der Rohrwand des Meßrohrs mehr als 0.5 mm und weniger als 3 mm und die Wanddicke der Rohrwand des das erste Trägerelement bildenden Rohres mehr als 3 mm betragen.

Nach einer neunten Ausgestaltung der Erfindung ist vorgesehen, daß der Meßwandler außer dem Meßrohr kein Rohr aufweist, das dafür eingerichtet ist, in einem Lumen ein strömendes Medium zu führen und währenddessen um eine statische Ruhelage schwingen gelassen zu werden

Nach einer zehnten Ausgestaltung der Erfindung weisen das erste Trägerende des ersten Trägerelements einen Anschlußflansch , in den das erste Rohrende des Meßrohrs mündet, und das zweite Trägerende des ersten Trägerelements einen Anschlußflansch aufweist, in den das zweite Rohrende des Meßrohrs mündet, auf.

Nach einer elften Ausgestaltung der Erfindung ist das erste Trägerelement dafür eingerichtet, in den Verlauf einer Rohrleitung eingesetzt zu werden, derart, daß das Lumen des Meßrohrs unter Bildung eines Strömungspfades mit einem Lumen nämlicher Rohrleitung kommuniziert.

Nach einer zwölften Ausgestaltung der Erfindung ist vorgesehen, daß die Resonanzfrequenz des Nutzmodes von einer, beispielsweise zeitlich veränderlichen, Dichte des im Meßrohr geführten Mediums abhängig ist.

Nach einer dreizehnten Ausgestaltung der Erfindung wohnt dem Meßwandler eine Vielzahl von jeweils eine Resonanzfrequenz aufweisenden Störmoden erster Art, nämlich von Schwingungsmoden, in denen das erste Trägerelement jeweils Störschwingungen, nämlich jeweils Bewegungen relativ zum Meßrohrs bewirkende Schwingungen um seine statische Ruhelage ausführen kann, sowie eine Vielzahl von jeweils eine Resonanzfrequenz aufweisenden Störmoden zweiter Art, nämlich von Schwingungsmoden, in denen das zweite Trägerelement jeweils Störschwingungen, nämlich jeweils Bewegungen relativ zum Meßrohrs bewirkende Schwingungen um seine statische Ruhelage ausführen kann, inne, und ist der Meßwandler ausgestaltet, daß die Resonanzfrequenz sowohl jedes der Störmoden erster Art als auch jedes der Störmoden zweiter Art, beispielsweise dauerhaft, von der Resonanzfrequenz des Nutzmodes, beispielsweise um jeweils mehr als 2 Hz, abweicht. Im besonderen ist vorgesehen, daß ein dem Meßwandler innewohnender, dem Nutzmode ähnlicher erster Störmode zweiter Art, in dem das zweite Trägerelement solche Störschwingungen ausführen kann, die genauso viele Schwingungsbäuchen und Schwingungsknoten wie die Nutzschwingungen des Meßrohrs aufweisen, eine Resonanzfrequenz aufweist, die kleiner als die Resonanzfrequenz des Nutzmodes ist

Nach einer vierzehnten Ausgestaltung der Erfindung ist vorgesehen, daß die Nutzfrequenz, etwa infolge zeitlicher Änderungen einer Dichte eines im Lumen des Meßrohrs strömenden Mediums, innerhalb eines Nutzfrequenzintervalls veränderlich ist; dies im besonderen derart, daß ein dem Meßwandler innewohnender, dem Nutzmode ähnlicher erster Störmode, in dem das zweite Trägerelement solche Störschwingungen ausführen kann, die genauso viele Schwingungsbäuchen und Schwingungsknoten wie die Nutzschwingungen des Meßrohrs aufweisen, eine Resonanzfrequenz aufweist, die - beispielsweise um mehr als 2 Hz - kleiner als eine durch einen kleinsten von der Nutzfrequenz nicht unterschrittenen Frequenzwert definierte untere Intervallgrenze des Nutzfrequenzintervalls ist, und/oder derart, daß ein dem Meßwandler innewohnender zweiter Störmode, in dem das zweite Trägerelement solche Störschwingungen ausführen kann, die einen Schwingungsbauch mehr, mithin einen Schwingungsknoten mehr als die Nutzschwingungen des Meßrohrs aufweisen, eine Resonanzfrequenz aufweist, die - beispielsweise um mehr als 2 Hz -größer als eine durch einen größten von der Nutzfrequenz nicht überschrittenen Frequenzwert definierte obere Intervallgrenze des Nutzfrequenzintervalls ist.

Nach einer fünfzehnten Ausgestaltung der Erfindung ist vorgesehen, daß die Nutzschwingungen des Meßrohrs genau vier Schwingungsknoten, mithin genau drei Schwingungsbäuche aufweisen. Ferner ist der Meßwandler so ausgestaltet, daß eine Resonanzfrequenz eines dem Meßwandler innewohenenden Störmodes, in dem das zweite Trägerelement solche Störschwingungen ausführen kann, die einen Schwingungsbauch weniger, mithin einen Schwingungsknoten weniger als die Nutzschwingungen des Meßrohrs aufweisen - beispielsweise um mehr als 2 Hz - kleiner ist als eine untere Intervallgrenze eines Nutzfrequenzintervalls, innerhalb dem die Nutzfrequenz, etwa infolge zeitlicher Änderungen einer Dichte eines im Lumen des Meßrohrs strömenden Mediums, veränderlich ist.

Nach einer sechzehnten Ausgestaltung der Erfindung ist vorgesehen, daß das Meßrohr und das zweite Trägerelement dafür eingerichtet sind, auf eine von außen via erstes Trägerelement, beispielsweise nämlich via erstes Trägerende des ersten Trägerelements und/oder via zweites Trägerende des ersten Trägerelements, zugleich auf Meßrohr und zweites Trägerelement übertragbare, eine - beispielsweise der Resonanzfrequenz des Nutzmodes entsprechende - Störfrequenz aufweisende Störschwingung mit einer Parallelschwingung, nämlich jeweils mit einer einen Abstand zwischen der ersten und zweiten Sensorkomponente nicht verändernden, jeweils eine der Störfrequenz entsprechende Frequenz aufweisende Schwingung zu reagieren.

Nach einer siebzehnten Ausgestaltung der Erfindung ist vorgesehen, daß das erste Trägerende des ersten Trägerelements und das erste Trägerende des zweiten Trägerelements starr, nämlich in einer Relativbewegungen des ersten Trägerendes des ersten Trägerelements und des ersten Trägerendes des zweiten Trägerelements verhindernden Weise, miteinander verbunden sind, und daß das zweite Trägerende des ersten Trägerelements und das zweite Trägerende des zweiten Trägerelements starr, nämlich in einer Relativbewegungen des zweiten Trägerendes des ersten Trägerelements und des zweiten Trägerendes des zweiten Trägerelements verhindernden Weise, miteinander verbunden sind.

Nach einer achtzehnten Ausgestaltung der Erfindung ist vorgesehen, daß das erste Trägerende des ersten Trägerelements gleichermaßen starr mit dem ersten Rohrende des Meßrohrs sowie mit dem ersten Trägerende des zweiten Trägerelements verbunden ist, und daß das zweite Trägerende des ersten Trägerelements gleichermaßen starr mit dem zweiten Rohrende des Meßrohrs sowie mit dem zweiten Trägerende des zweiten Trägerelements verbunden ist.

Nach einer neunzehnten Ausgestaltung der Erfindung ist vorgesehen, daß das erste Trägerende des ersten Trägerelements mit dem ersten Rohrende des Meßrohrs und mit dem ersten Trägerende des zweiten Trägerelements in einer Bewegungen des ersten Rohrendes des Meßrohrs relativ zum ersten Trägerende des zweiten Trägerelements verhindernden Weise mechanisch verbunden ist, und daß das zweite Trägerende des ersten Trägerelements mit dem zweiten Rohrende des Meßrohrs und mit dem zweiten Trägerende des zweiten Trägerelements in einer Bewegungen des zweiten Rohrendes des Meßrohrs relativ zum zweiten Trägerende des zweiten Trägerelements verhindernden Weise mechanisch verbunden ist.

Nach einer zwanzigsten Ausgestaltung der Erfindung ist vorgesehen, daß das Meßrohr und zweite Trägerelement zueinander parallel verlaufen, beispielsweise derart, daß ein minimaler Abstand zwischen Meßrohr und nämlichem Trägerelement zumindest über einen sich zwischen dem ersten Schwingungssensor und dem Schwingungserreger erstreckenden Bereich gleichbleibend ist.

Nach einer einundzwanzigsten Ausgestaltung der Erfindung ist vorgesehen, daß das Meßrohr zumindest abschnittsweise S- bzw. Z-förmig gekrümmt und/oder zumindest abschnittsweise gerade ist.

Nach einer zweiundzwanzigsten Ausgestaltung der Erfindung ist vorgesehen, daß das zweite Trägerelement zumindest abschnittsweise S- bzw. Z-förmig gekrümmt und/oder zumindest abschnittsweise gerade ist

Nach einer dreiundzwanzigsten Ausgestaltung der Erfindung ist vorgesehen, daß das zweite Trägerelement mittels eines zylindrischen Rohres mit einer Rohrwand und einem von nämlicher Rohrwand umschlossenen Lumen gebildet ist, beispielsweise derart, daß das Lumen des Meßrohrs und das Lumen des das zweite Trägerelement bildenden Rohres gleich groß sind, und/oder daß eine Wanddicke der Rohrwand des das zweite Trägerelement bildenden Rohres und die Wanddicke der Rohrwand des Meßrohrs gleich groß sind.

Nach einer vierundzwanzigsten Ausgestaltung der Erfindung ist vorgesehen, daß das Meßrohr ein Symmetriezentrum aufweist, bezüglich dessen das Meßrohr punktsymmetrisch ist.

Nach einer fünfundzwanzigsten Ausgestaltung der Erfindung ist vorgesehen, daß das Meßrohr ein Symmetriezentrum aufweist, bezüglich dessen das Meßrohr punktsymmetrisch ist und daß das zweite Trägerelement ebenfalls ein Symmetriezentrum aufweist, bezüglich dessen das zweite Trägerelement punktsymmetrisch ist; dies im besonderen deart, daß das Symmetriezentrum des Meßrohrs und das Symmetriezentrum des zweiten Trägerelements zumindest in einer zwischen dem Meßrohr dem zweiten Trägerelement, beispielsweise zum Meßrohr und/oder zum zweiten Trägerelement parallel, verlaufenden gedachten Projektionsebene des Meßwandlers koinzidieren.

Nach einer ersten Weiterbildung der Erfindung umfaßt der Meßwandler weiters: einen, beispielsweise elektrodynamischen und/oder zum ersten Schwingungssensor baugleichen, zweiten Schwingungssensor mit einer von der ersten Sensorkomponente des ersten Schwingungssensors beabstandet außen am Meßrohr fixierten, beispielsweise mit dessen Rohrwand stoffschlüssig verbundenen und/oder mittels eines Permanentmagneten gebildeten und/oder zur ersten Sensorkomponente des ersten Schwingungssensors baugleichen, ersten Sensorkomponente und mit einer von der zweiten Sensorkomponente des ersten Schwingungssensors beabstandet am zweiten Trägerelement angebrachten, beispielsweise mittels einer Zylinderspule gebildeten und/oder zur zweiten Sensorkomponente des ersten Schwingungssensors baugleichen, zweiten Sensorkomponente. Nämlicher zweiter Schwingungssensor ist im besonderen ferner dafür eingerichtet, Bewegungen des Meßrohrs relativ zum zweiten Trägerelement zu erfassen, beispielsweise Bewegungen von Schwingungen des Meßrohrs mit Nutzfrequenz, und in ein Schwingungen des Meßrohrs repräsentierendes zweites Schwingungssignal zu wandeln, beispielsweise derart, daß zwischen dem ersten und zweiten Sensorsignal eine mit einer Massendurchflußrate eines im Lumen des Meßrohrs strömenden Mediums korrespondierende Phasendifferenz meßbar ist.

Ein Grundgedanke der Erfindung besteht darin, bei Meßwandlern vom Vibrationstyp deren Empfindlichkeit auf die Massendurchflußrate, dadurch zu steigern, indem einerseits der Schwingungserreger mittels am Meßrohr bzw. am äußeren Trägerelement angebrachten Erregerkomponenten gebildet ist, während anderseits der Schwingungssensor mittels am Meßrohr bzw. an dem vom äußeren Trägerelement separierten inneren Trägerelement angebrachten Sensorkomponenten gebildet ist. Das äußere Trägerelement ist, nicht zuletzt auch wegen seiner Funktion als Meßwandler-Gehäuse, nämlich auch schon bei konventionellen Meßwandlern im Vergleich zum Meßrohr regelmäßig extrem biege- und verwindungssteif ausgebildet und kann zudem ohne weiteres so getrimmt werden, daß es zudem auch nur weit von den üblichen Nutzfrequenzen entfernte Resonanzfrequenzen aufweist. Somit kann mit dem äußeren Trägerelement für den Schwingungserreger ein nahezu ideales gegen das Meßrohr wirkendes Widerlager bereitgestellt werden, derart, daß es wegen seiner im Vergleich zum Meßrohr extrem geringen Nachgiebigkeit ermöglicht, die vom Schwingungserreger gelieferte mechanische Erregerleistung effizient, nämlich idealerweise ausschließlich, in Schwingungen des Meßrohrs, besonders auch dessen Nutzschwingungen wandeln zu können, umgekehrt aber selbst nicht bzw. nicht nennenswert vom Schwingungserreger in Schwingungen versetzt wird. Darüberhinaus erfährt zudem auch das die jeweils eine Sensorkomponente jedes der Schwingungssensoren tragende innere Trägerelement keine aktive Anregung von Schwingungen durch den Schwingungserreger, so daß im Ergebnis lediglich das Meßrohr nennenswert Schwingungen mit der Nutzfrequenz ausführt, mithin praktisch die gesamte in Schwingungen mit der Nutzfrequenz umgesetzte Erregerleistung einen effektiven Beitrag zur Generierung der für die Messung der Massendurchflußrate bzw. des Massendurchflusses benötigten Corioliskräfte liefern kann.

Die Erfindung sowie weitere vorteilhafte Ausgestaltungen davon werden nachfolgend anhand von Ausführungsbeispielen näher erläutert, die in den Figuren der Zeichnung dargestellt sind. Gleiche Teile sind in allen Figuren mit denselben Bezugszeichen versehen; wenn es die Übersichtlichkeit erfordert oder es anderweitig sinnvoll erscheint, wird auf bereits erwähnte Bezugszeichen in nachfolgenden Figuren verzichtet. Weitere vorteilhafte Ausgestaltungen oder Weiterbildungen, insb. auch Kombinationen zunächst nur einzeln erläuterter Teilaspekte der Erfindung, ergeben sich ferner aus den Figuren der Zeichnung wie auch den Unteransprüchen an sich. Im einzelnen zeigen:
- Fig. 1: in einer perspektivischen Seitenansicht eine, insb. für den Verwendung in der industriellen Meß- und Automatisierunsgtechnik geeignetes, ein Meßsystem mit einem ein Meßwandlergehäuse aufweisenden Meßwandler vom Vibrationstyp und einer in einem am Meßwandlergehäuse befestigten Elektronikgehäuse untergebrachten Meß- und Betriebselektronik;
- Fig. 2, 3: in unterschiedlichen perspektivischen Seitenansichten ein Ausführungsbeispiel eines für ein Meßsystem gemäß Fig. 1 geeigneten Meßwandlers vom Vibrationstyp mit einem Meßrohr; und
- Fig. 4,5 6: in unterschiedlichen Seitenansichten einen Meßwandler gemäß den Fig. 2 bzw. 3;
- Fig. 7: schematisch Schwingungsformen eines Meßrohrs eines Meßwandlers gemäß Fig. 2 bzw. 3;
- Fig. 8: schematisch eine Schwingungsform eines Meßwandlers gemäß Fig. 2 bzw. 3; und.
- Fig. 9: schematisch eine Schwingungsform eines Meßwandlers gemäß Fig. 2 bzw. 3.

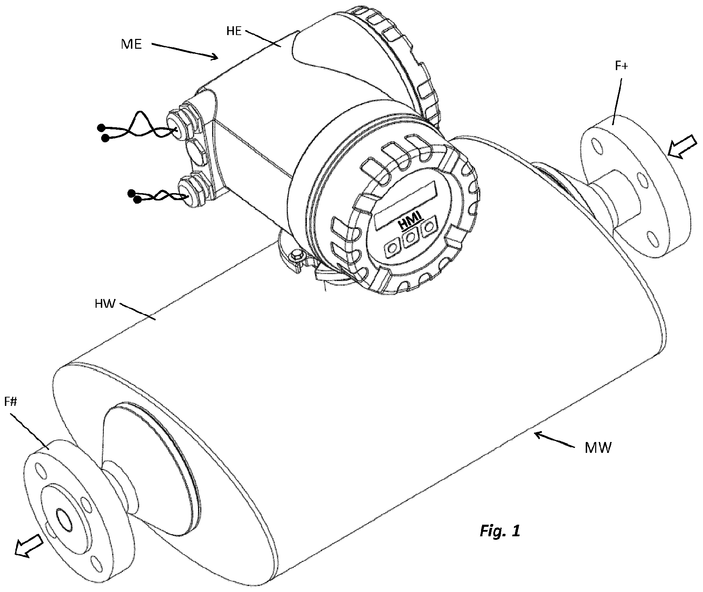

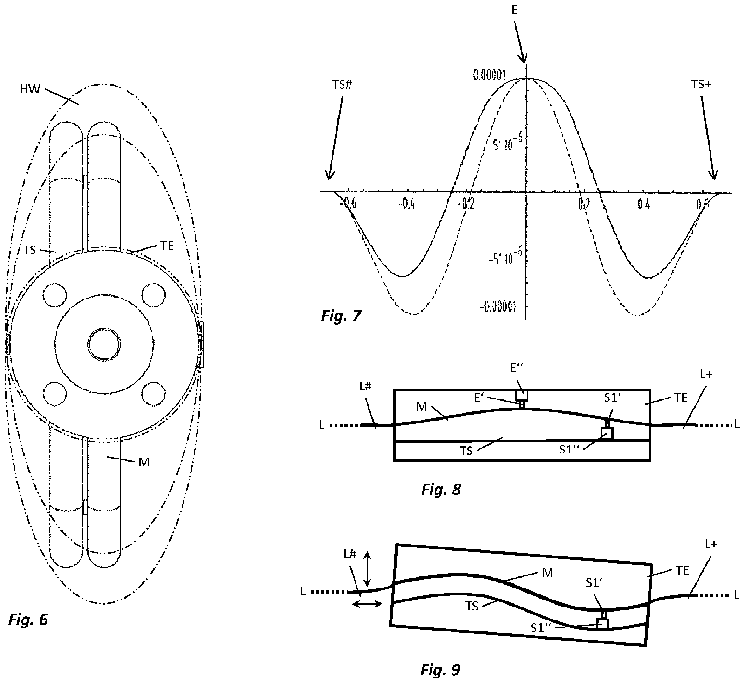

In den Fig. 1 - 6 ist - in unterschiedlichen Ansichten - ein Meßsystem zum Ermitteln eines Massendurchflusses, nämlich einer während eines vorgebbaren oder vorab bestimmten Meßintervalls insgesamt geflossenen Masse, und/oder einer Massendurchflußrate eines in einer - lediglich in Fig. 8 bzw. 9 schematisiert dargestellten - Rohrleitung L strömenden Mediums, insb. einer Flüssigkeit oder eines Gases, schematisch dargestellt. Das Meßsystem umfaßt einen im Betrieb von Medium durchströmten Meßwandler vom Vibrationstyp sowie eine - hier nicht weiter dargestellte - Meß- und Betriebselektronik ME zum Erzeugen von die Massendurchflußrate bzw. den Massendurchfluß repräsentierenden Meßwerten bzw. zum Ausgeben eines solchen Meßwerts als einen aktuell gültigen Meßwert des Meßsystems an einem entsprechenden Meßausgang der Meß- und Betriebselektronik ME.

Die, z.B. mittels wenigstens eines Mikroprozessors und/oder mittels eines digitalen Signalprozessors (DSP) gebildete, Meß- und Betriebselektronik ME kann wie in den Fig. 1 angedeutet, in einem einzigen Elektronikgehäuse HE des Meßsystems untergebracht sein.

Die mittels der Meß- und Betriebselektronik ME generierten Meßwerte X können beispielsweise vor Ort, nämlich unmittelbar an der mittels des Meßsystems gebildten Meßstelle, angezeigt werden. Zum Visualisieren von Meßsystem intern erzeugten Meßwerten und/oder gegebenenfalls Meßsystem intern generierten Systemstatusmeldungen, wie etwa einer Fehlermeldung oder einem Alarm, vor Ort kann das Meßsystem, wie auch Fig. 1 angedeutet, beispielsweise ein mit der Meß- und Betriebselektronik kommunizierendes, ggf. auch portables, Anzeige- und Bedienelement HMI aufweisen, wie etwa ein im Elektronikgehäuse HE hinter einem darin entsprechend vorgesehenen Fenster plaziertes LCD-, OLED- oder TFT-Display sowie eine entsprechende Eingabetastatur und/oder ein Touchscreen. In vorteilhafter Weise kann die, beispielsweise auch (re-)programmier- bzw. fernparametrierbare, Meß- und Betriebselektronik zudem so ausgelegt sein, daß sie im Betrieb des Meßsystems mit einem diesem übergeordneten elektronischen Datenverarbeitungssystem, beispielsweise einer speicherprogrammierbaren Steuerung (SPS), einem Personalcomputer und/oder einer Workstation, via Datenübertragungssystem, beispielsweise einem Feldbussystem und/oder drahtlos per Funk, Meß- und/oder andere Betriebsdaten austauschen kann, wie etwa aktuelle Meßwerte, Systemdiagnosewerte oder aber auch der Steuerung des Meßgeräts dienende Einstellwerte. Des weiteren kann die Meß- und Betriebselektronik ME so ausgelegt sein, daß sie von einer externen Energieversorgung, beispielsweise auch über das vorgenannte Feldbussystem, gespeist werden kann. Für den Fall, daß das Meßsystem für eine Ankopplung an ein Feldbus- oder ein anderes Kommunikationssystem vorgesehen ist, kann die, beispielsweise auch vor Ort und/oder via Kommunikationssystem (re-)programmierbare, Meß- und Betriebselektronik ME zu dem eine entsprechende, insb. einem der einschlägigen Industriestandards konforme, Kommunikations-Schnittstelle für eine Datenkommunikation aufweisen, z.B. zum Senden von Meß- und/oder Betriebsdaten, mithin den Massendurchfluß bzw. die Massendurchflußrate repräsentierenden Meßwerte, an die bereits erwähnte speicherprogrammierbare Steuerung (SPS) oder ein übergeordnetes Prozeßleitsystem und/oder zum Empfangen von Einstelldaten für das Meßsystem. Darüberhinaus kann die Meß- und Betriebselektronik ME beispielsweise eine solche interne Energieversorgungsschaltung aufweisen, die im Betrieb von einer im vorgenannten Datenverarbeitungssystem vorgesehenen externen Energieversorgung über das vorgenannte Feldbussystem gespeist wird. Hierbei kann das Meßsystem beispielsweise als sogenanntes Vierleiter-Meßgerät ausgebildet sein, bei dem die interne Energieversorgungsschaltung der Meß- und Betriebselektronik ME mittels einem ersten Paars Leitungen mit einer externen Energieversorgung und die interne Kommunikationsschaltung der Meß- und Betriebselektronik ME mittels eines zweiten Paars Leitungen mit einer externen Datenverarbeitungsschaltung oder einem externen Datenübertragungssystem verbunden werden kann.

Der Meßwandler ist mittels eines ein einlaßseitiges erstes Rohrende M+ und ein auslaßseitiges zweites Rohrende M# aufweisendes Meßrohr M mit einer eine vorgegebene Wanddicke aufweisenden Rohrwand und einem sich zwischen dessen ersten und zweiten Rohrende erstreckenden, von nämlicher Rohrwand umschlossenen Lumen gebildet. Das Meßrohr M ist im besonderen dafür eingerichtet, im Betrieb des Meßsystems in seinem - unter Bildung eines durchgehenden Strömungspfades mit einem Lumen der angeschlossenen Rohrleitung kommunizierenden - Lumen ein strömendes Medium, beispielsweise ein Gas und/oder eine Flüssigkeit, zu führen und währenddessen zum Erzeugen von Corioliskräften um eine statische Ruhelage schwingen gelassen zu werden, wobei der Meßwandler gemäß einer Ausgestaltung der Erfindung außer dem Meßrohr M kein (weiteres) Rohr aufweist, das dafür eingerichtet ist, in einem Lumen ein strömendes Medium zu führen und währenddessen um eine statische Ruhelage schwingen gelassen zu werden. Im besonderen ist das Meßrohr M - wie bei Meßsystemen der in Rede stehenden Art üblich - zudem ferner dafür vorgesehen, direkt in den Verlauf der erwähnten Rohrleitung L eingesetzt und so daran, nämliche an ein einlaßseitiges erstes Leitungssegment L+ der Rohrleitung L und ein auslaßseitges zweites Leitungssegment der Rohrleitung, L# angeschlossen zu werden, daß das Lumen des Meßrohrs mit einem jeweiligen Lumen jedes der beiden Leitungssegmente L+, L# kommuniziert und eine Strömung vom ersten Leitungssegment L+, weiters durch das Meßrohr M hindurch bis hin zum zweiten Leitungssegment L# ermöglichender Strömungspfad gebildet ist. Das Meßrohr M kann - wie bei derartigen Meßwandlern üblich - beispielsweise ein aus einem Edelstahl oder auch aus einer Titan-, einer Tantal- und/oder einer Zirconium-Legierung hergestelltes, beispielsweise auch einstückiges Metallrohr sein, und beispielsweise ein Kaliber aufweisen, daß größer als 0,5 mm ist, insb auch größer als 20 mm ist.

Neben dem Meßrohr M umfaßt der Meßwandler ein erstes Trägerelement TE, das mit einem ersten Trägerende TE+ mit dem Rohrende M+ des Meßrohrs M und mit einem zweiten Trägerende TE# mit dem Rohrende M# des Meßrohrs M mechanisch verbunden ist, sowie ein, beispielsweise mittels eines zum Meßrohr M baugleichen und/oder zum Meßrohr M zumindest abschnittsweise parallel verlaufenden Blindrohrs gebildetes, vom Meßrohr seitlich beabstandetes zweites Trägerelement TS, das sowohl mit einem ersten Trägerende TS+ als auch mit einem zweiten Trägerende TS# mit dem Trägerelement TE mechanisch gekoppelt ist. Das Trägerelement TE ist. u.a. auch dafür vorgesehen, in den Verlauf der erwähnten Rohrleitung L eingesetzt zu werden, derart, daß das Lumen des Meßrohrs unter Bildung des erwähnten Strömungspfades mit einem Lumen nämlicher Rohrleitung kommuniziert, sowie mit nämlicher Rohrleitung so mechanisch verbunden zu werden, daß im Ergebnis der gesamte Meßwandler MW in der Rohrleitung gehaltert ist; dies im besonderen auch in der Weise, daß von der Rohrleitung eingetragene mechanische Belastungen, insb. Einspannkräfte bzw. -momente, überwiegend vom Trägerelement TE aufgenommen, mithin von den anderen Komponenten des Meßwandlers MW weitgehend fern gehalten werden. Zum Anschließen Trägerelements TE zusammen mit dem Meßrohr M an die Rohrleitung kann - wie bei solchen Meßwandlern durchaus üblich - jedes der Trägerenden TE+, TE# des Trägerelements TE jeweils einen entsprechenden Anschlußflansch F+ bzw. F# aufweisen, in den jeweils ein korrespondierendes Rohrende M+ bzw. M# des Meßrohrs M mündet.

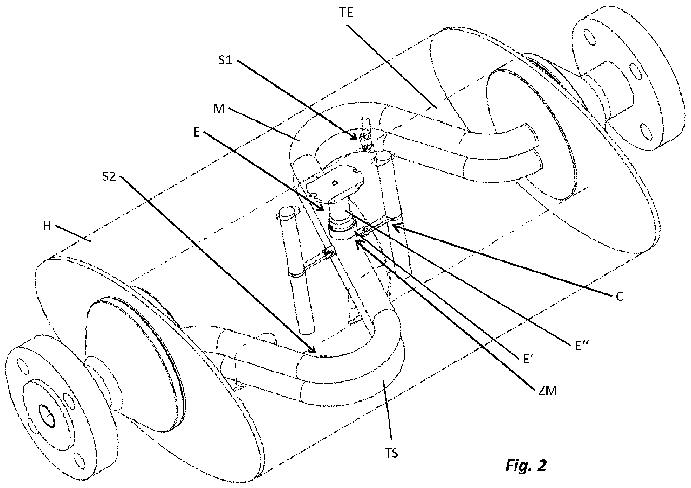

Wie in aus den Fig. 2 - 5 bzzw. 8 oder 9 ersichlich, umfaßt der Meßwandler desweiteren wenigstens einen, mittels eines - hier aus Gründen besserer Übersichtlichkeit nicht gezeigten - Paares von Anschlußdrähten, an die Meß- und Betriebselektronik ME elektrisch anschließbaren und davon entsprechend ansteuerbaren - beispielsweise auch einzigen - Schwingungserreger E zum Anregen von mechanischen Schwingungen des Meßrohrs M, und zwar derart, daß das Meßrohr M zumindest anteilig Nutzschwingungen, nämlich für das Erzeugen von Corioliskräften geeignete Schwingungen um seine statische Ruhelage mit einer Nutzfrequenz, nämlich einer der Resonanzfrequenz eines dem Meßwandler innewohnenden - im folgenden als Antriebs- oder auch als Nutzmode bezeichneten - natürlichen Schwingungsmode entsprechenden Frequenz, ausführt.

Im in den Fig. 1 - 6 gezeigten Ausführungsbeispiel erstreckt sich eine entsprechende Schwinglänge, nämlich ein tatsächlich Nutzschwingungen ausführender Abschnitt des Meßrohrs M, vom Trägerende TS+ bis zum Trägerelements TS# des Trägerelements TS. im besonderen ist hierbei ein solcher natürlicher Schwingungsmode des Meßwandlers MW als Nutzmode gewählt, mithin sind im Betrieb solche Resonanzschwingungen des Meßwandlers MW als Nutzschwingungen angeregt, die zum einen eine möglichst hohe Empfindlichkeit auf die Massendurchflußrate des strömenden Mediums aufweisen und deren Resonanzfrequenz zum anderen auch in einem hohen Maße auch von einer -typischerweise auch zeitlich veränderlichen - Dichte ρ des im Meßrohr geführten Mediums abhängig sind, mithin eine hohe Auflösung sowohl geringfügiger Schwankungen der Massendurchflußrate als auch geringfügiger Schwankungen der Dichte des Mediums ermöglichen.

Bei dem hier gezeigten Meßwandler haben sich beispielsweise Biegeschwingungen des Meßrohrs M um eine dessen beiden Rohrenden M+, M# imaginär verbindende gedachte Schwingungsachse für die Verwendung als Nutzschwingungen als besonders geeignet erwiesen, die - wie in Fig. 7 schematisch dargestellt - über die gesamte Schwinglänge des Meßrohrs genau vier Schwingungsknoten, mithin genau drei Schwingungsbäuche aufweisen. Gemäß einer weiteren Ausgestaltung der Erfindung ist der Schwingungserreger E daher dafür eingerichtet, solche Schwingungen des Meßrohrs M als Nutzschwingungen anzuregen, die, wie in Fig. 7 schematisch dargestellt, drei Schwingungsbäuche, mithin vier Schwingungsknoten aufweisen. Letztere liegen in zumindest einer gedachten Projektionsebene des Meßwandlers auf der erwähnten, die beiden Rohrende M+, M# miteinander imaginär verbindenden gedachten, Schwingungsachse.

infolge von den mittels der Nutzschwingungen des vom Medium durchströmten Meßrohrs erzeugten Corioliskräften führt das Meßrohr zusätzlich zu nämlichen Nutzschwingungen auch Coriolisschwingungen, nämlich durch Corioliskräfte induzierbare bzw. induzierte Schwingungen um seine statische Ruhelage mit einer der Nutzfrequenz entsprechenden Frequenz aus. Nämliche Coriolisschwingungen können beispielsweise einem dem Meßwandler gleichermaßen innewohnenden, allerdings eine von der Resonanzfrequenz des Nutzmodes abweichende Resonanzfrequenz aufweisenden natürlichen Schwingungsmode entsprechen, in dem das Meßrohr Schwingungen - beispielsweise Biegeschwingungen um die erwähnte Schwingungsachse - mit jeweils einem Schwingungsbauch und einem Schwingungsknoten mehr oder aber auch - etwa für den vorgenannten Fall, daß die Nutzschwingungen vier Schwingungsknoten und drei Schwingungsbäuche aufweisen - mit jeweils einem Schwingungsbauch und einem Schwingungsknoten weniger, als bei den Nutzschwingungen ausführen kann bzw. ausführt.

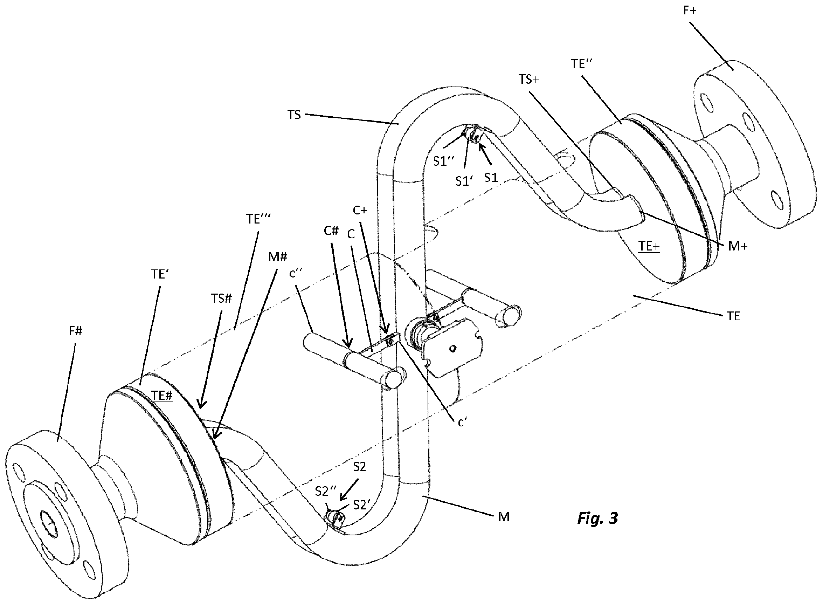

Zum Erfassen von Schwingungen des Meßrohrs M, nicht zuletzt auch den Nutz- bzw. den Coriolisschwingungen, umfaßt der Meßwandler weiters einen, beispielsweise mittels eines - hier aus Gründen besserer Übersichtlichkeit ebenfalls nicht gezeigten - weiteren Paares von Anschlußdrähten, an die Meß- und Betriebselektronik elektrisch angschließbaren, insb. elektrodynamischen, ersten Schwingungssensor S1. Der Schwingungssensor S1 ist hierbei im besonderen ausgestaltet, um Bewegungen des Meßrohrs M relativ zum Trägerelement TS, nicht zuletzt auch Bewegungen von Schwingungen des Meßrohrs mit Nutzfrequenz, zu erfassen und in ein Schwingungen des Meßrohrs repräsentierendes erstes Schwingungssignal zu wandeln, das wiederum eine der Nutzfrequenz entsprechende Signalfrequenz aufweist. Dafür weist nämlicher Schwingungssensor S1 - wie auch in Fig. 3 schematisch dargestellt - eine außen am Meßrohr M fixierte, beispielsweise mit dessen Rohrwand stoffschlüssig verbundene und/oder mittels eines Permanentmagneten gebildete, erste Sensorkomponente S1' sowie eine am Trägerelement TS angebrachte, beispielsweise mittels einer Zylinderspule gebildete, zweite Sensorkomponente S1" auf.

Die Meß- und Betriebselektronik ME ist nicht zuletzt auch dafür eingerichtet, zumindest zeitweise ein elektrisches - beispielsweise auf eine vorgegebenen Spannungshöhe und/oder auf eine vorgegebene Stromstärke geregeltes - Treibersignal für den - beispielsweise elektrodynamischen, nämlich mittels Tauchankerspule gebildeten bzw. als Schwingspule realisierten -Schwingungserreger E zu generieren, das dazu dient, den Schwingungserreger E kontrolliert zumindest mit der für das Anregen bzw. Aufrechterhalten der Nutzschwingungen benötigten elektrischen Leistung zu speisen, und das dementsprechend eine der (momentanen) Resonanzfrequenz des Nutzmodes, mithin der Nutzfrequenz entsprechende Signalfrequenz aufweist. Der Schwingungserreger E wandelt dabei eine mittels des elektrischen Treibersignals eingespeiste elektrische Erregerleistung in, z.B. pulsierende oder harmonische, nämlich im wesentlichen sinusförmige, Erregerkräfte, die entsprechend auf das Meßrohr einwirken und somit die gewünschten Nutzschwingungen aktiv anregen. Beispielsweise kann das Treibersignal dabei gleichzeitig auch eine Vielzahl von sinusförmigen Signalkomponenten mit voneinander verschiedener Signalfrequenz aufweisen, von denen eine - etwa eine zumindest zeitweise hinsichtlich einer Signalleistung dominierende - Signalkomponente die der Nutzfrequenz entsprechende Signalfrequenz aufweist. Die - durch Wandlung von in den Schwingungserreger E eingespeister elektrischer Erregerleistung schlußendlich generierten - Erregerkräfte können dabei in dem Fachmann an und für sich bekannter Weise, nämlich mittels einer in der Meß- und Betriebselektronik ME vorgesehenen, das Treibersignal anhand von Signalfrequenz und Signalamplitude des wenigstens einen Sensorsignals ein- und über einen Ausgangskanal bereitstellenden Treiberschaltung entsprechend erzeugt werden. Zum Ermitteln der momentanen Resonanzfrequenz des Nutzmodes bzw. zum Einstellen der entsprechenden Signalfrequenz für das Treibersignal kann in der Treiberschaltung beispielsweise eine digitalen Phasen-Regelschleife (PLL -phase locked loop) vorgesehen sein, während eine einen Betrag nämlicher Erregerkräfte bestimmende Stromstärke des Treibersignals beispielsweise mittels eines entsprechenden Stromreglers der Treiberschaltung passend eingestellt werden kann. Die Meß- und Betriebselektronik kann hier z.B. auch dafür ausgestaltet sein, das Treibersignal in der Weise zu regeln, daß die Resonanzschwingungen eine gleichbleibende, mithin auch von der Dichte ρ bzw. auch der Viskosität η des jeweils zu messenden Mediums weitgehend unabhängige Amplitude aufweisen. Der Aufbau und die Verwendung vorgenannter Phasenregel-Schleifen zum aktiven Anregen von Vibrationselementen der in Rede stehenden Art auf einer momentanen Resonanzfrequenz ist z.B. in der US-A 48 01 897 ausführlich beschrieben. Selbstverständlich können auch andere für das Einstellen der Erregerenergie bzw. der Erregerleistung geeignete, dem Fachmann an und für sich, beispielsweise auch aus eingangs erwähnten US-A 48 01 897, US-A 50 24 104, bzw. US-A 63 11 136, bekannte Treiberschaltungen verwendet werden. Darüberhinaus kann die Meß- und Betriebselektronik ferner auch dafür eingerichtet sein, etwa basierend auf dem Schwingungssignal und/oder basierend auf dem Treibersignal, eine Dichte und/oder eine Viskosität des Mediums zu messen.

Um eine möglichst effiziente Umwandlung der vom Schwingungserreger bereitgestellten mechanischen Erregerleistung in die Nutzschwingungen des Meßrohrs, mithin auch dessen Coriolisschwingungen zu erreichen ist beim erfindungsgemäßen Meßwandler der Schwingungserreger E, wie auch aus den Fig. 2 - 5 bzw. 8 ersichtlich, mittels einer außen am Meßrohr M fixierten, beispielsweise auch mit dessen Rohrwand stoffschlüssig verbundenen, ersten Erregerkomponente E' sowie mittels einer am Trägerelement TE angebrachten - hier nämlich auf einer dem Meßrohr zugewandten Innenseite des Trägerelements TE plazierte, zweiten Erregerkomponente E" gebildet. Die Effizienz, mit der die Nutz- bzw. Coriolisschwingungen anregbar sind, wird hierbei dadurch verbessert, indem, wie auch in Fig. 8 schematisch dargestellt, mittels des so gebildeten Schwingungserregers - im Gegensatz zu konventionellen Meßwandlern der in Rede stehenden Art - praktisch keine nennenswerte Erregerleistung in Schwingungen des Trägerelements TS umgewandelt wird, die vom Schwingungssensor S1 zwar erfaßbar sind, jedoch letztlich keinerlei Beitrag zu den für die Massendurchflußmessung erforderlichen Coriolisschwingungen des Meßrohrs leisten können. Für den erwähnten Fall, daß es sich beim Schwingungserreger E um einen elektrodynamischen Schwingungserreger handelt, können die Erregerkomponente E' beispielsweise mittels eines Permanentmagneten und die Erregerkomponente E" mittels einer - zum Permanentmagneten komplementären - Zylinderspule gebildet sein. Nach einer weiteren Ausgestaltung der Erfindung ist hierbei ferner vorgesehen, daß der Meßwandler - wie auch aus einer Zusammenschau der der Fig. 2 - 5 ersichtlich, außer dem Schwingungserreger E keinen Schwingungserreger mit einer am Trägerelement TE bzw. am Trägerelement TS angebrachten Erregerkomponente aufweist.

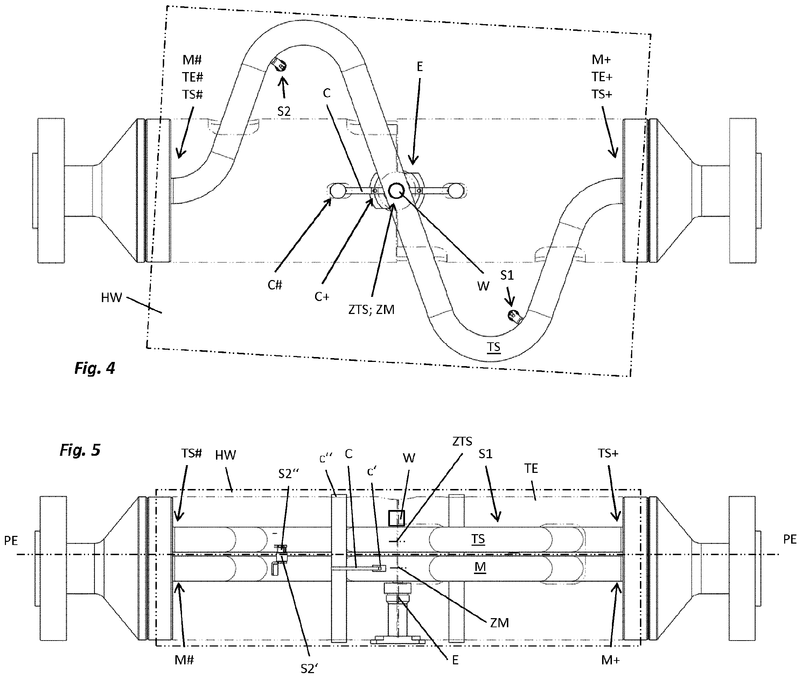

Wenngleich ein Erfassen der Nutz- wie auch der Coriolisschwingungen, mithin eine Messung der Massendurchflußrate bzw. des Massendurchflusses grundsätzlich auch mittels nur eines Schwingungssensors zu bewerkstelligen ist, beispielsweise durch eine Phasenmessung zwischen dem erwähnten den Schwingungserreger E treibenden Erregersignal und dem vom Schwingungssensor S1 gelieferten Sensorsignal, ist gemäß einer weiteren Ausgestaltung der Erfindung beim erfindungsgemäßen Meßwandler ein, beispielsweise wiederum elektrodynamischer bzw. zum ersten Schwingungssensor S1 baugleicher, zweiten Schwingungssensor S2 vorgesehen. Nämlicher Schwingungssensor weist - wie aus einer Zusammenschau der Fig. 3 und 5 ohne weiteres ersichtlich - eine von der Sensorkomponente S1' des Schwingungssensors S1 beabstandet außen am Meßrohr M fixierten, beispielsweise nämlich auch mittels eines Permanentmagneten gebildeten und/oder zur Sensorkomponente des ersten Schwingungssensors baugleiche, ersten Sensorkomponente S2' sowie eine von der zweiten Sensorkomponente S1" des Schwingungssensors S1 beabstandet am Trägerelement TS angebrachten, beispielsweise mittels einer Zylinderspule gebildeten und/oder zur Sensorkomponente S1" des Schwingungssensors S1 baugleichen, zweiten Sensorkomponente S2" auf. Gleichermaßen wie der Schwingungssensor S1 ist hierbei auch der Schwingungssensor S2 dafür eingerichtet, Bewegungen des Meßrohrs M relativ zum Trägerelement TS zu erfassen, etwa auch Bewegungen von Schwingungen des Meßrohrs M mit Nutzfrequenz, und in ein Schwingungen des Meßrohrs M repräsentierendes zweites Schwingungssignal zu wandeln, das eine der Nutzfrequenz entsprechende, mithin auch zur erwähnten Signalfrequenz des ersten Schwingungssignals gleiche Signalfrequenz aufweist; dies im besonderen auch derart, daß zwischen dem ersten und zweiten Sensorsignal eine mit einer Massendurchflußrate eines im Lumen des Meßrohrs strömenden Mediums korrespondierende Phasendifferenz meßbar ist, anhand der also die Meß- und Betriebselektronik ME die Massendurchflußrate bzw. den Massendurchfluß für das Medium ermitteln kann. nach einer weiteren Ausgestaltung der Erfindung ist ferner vorgesehen, daß der Meßwandler MW außer dem ersten und zweiten Schwingungssensor S1, S2 keinen (weiteren) Schwingungssensor mit einer am Trägerelement TS angebrachten Sensorkomponente aufweist.

Das Meßrohr M ist gemäß einer weiteren Ausgestaltung der Erfindung - und wie aus der Zusammenschau der Fig. 2, 3 und 4 ohne weiteres ersichtlich - bezüglich eines Symmetriezentrums ZM punktsymmetrisch ausgebildet, und kann daher beispielsweise gerade oder zumindest in einem mittleren Abschnitt auch S- bzw. Z-förmig gekrümmt sein, ggf. auch in der Weise, daß - wie auch aus Fig. 4 ersichtlich - abwechselnd bogenförmige Rohrabschnitte und gerade Rohrabschnitte aneinander gereiht sind. Dies hat u.a. den Vorteil, daß für den erwähnten Fall, daß als Nutzschwingungen Schwingungen des Meßrohrs mit drei Schwingungsbäuchen dienen, der Meßwandler, wie bereits in der eingangs erwähnten US-B 70 77 014 dargelegt, auch so ausgebildet werden kann, daß durch die Nutzschwingungen des Meßrohrs - auch bei in erheblichem Maße zeitlich ändernder Dichte - keine oder zumindest keine nennenswerten Querkräfte erzeugt werden, mithin keine damit einhergehenden Störungen der Coriolisschwingungen zu besorgen sind.

Zur weiteren Verbesserung des Schwingungsverhaltens, nicht zuletzt auch zur weiteren Verringerung der vorgenannten Querkräfte, ist der Meßwandler zusätzlich mit einem Federelement C ausgerüstet, das sowohl mit dem Meßrohr als auch mit dem ersten Trägerelement mechanisch gekoppelt ist, derart, daß es im Betrieb infolge einer Bewegung des Meßrohrs relativ zum ersten Trägerelement elastisch verformt wird. Dafür ist das Federelement gemäß einer weiteren Ausgestaltung der Erfindung mit einem ersten Ende C+ mit dem Meßrohr M, beispielsweise an einem auf einer auch die erste Erregerkomponente E' imaginär berührenden gedachten kreisförmigen Umfangslinie des Meßrohrs M liegenden Befestigungspunkt c', und mit einem zweiten Ende C# mit dem Trägerelement TE, beispielsweise an einem von der zweiten Erregerkomponente E" seitlich beabstandeten Befestigungspunkt c", mechanisch verbunden. Hierbei sind das erste Ende C+ des Federelements C und das Meßrohr M möglichst starr, nämlich in einer Relativbewegungen nämlichen Endes C+ und des Meßrohrs ausschließenden Weise, bzw. sind das zweite Ende C# des Federelements C und das Trägerelement TE möglichst starr, nämlich in einer Relativbewegungen nämlichen Endes und des Trägerelements TE ausschließenden Weise, miteinander verbunden. Das Federelement C kann beispielsweise mittels einer Spiralfeder oder aber auch - wie aus eine Zusammenschau der Fig. 2 - 5 ohne weiteres ersichtlich - mittels einer Blattfeder gebildet sein, die vermittels eines - unter Bildung des Befestigungspunktes c' - stoffschlüssig am Meßrohr fixierten ersten Halter mit dem Meßrohr und vermittels eines - unter Bildung des Befestigungspunktes c" - stoffschlüssig am Trägerelement TE fixieren stabförmigen zweiten Halters mit dem Trägerelement TE verbunden ist. Wie bereits in der eingangs erwähnten US-B 70 77 014 gezeigt, kann mittels des Federelements C der Meßwandler MW zudem sogar derart getrimmt werden, daß im Ergebnis - wie auch in Fig. 7 durch die durchgezogene Linie symbolisiert - die durch die Nutzschwingungen des Meßrohrs entwickelten Querkräfte einander völlig neutralisieren können, so daß vom Meßwandler MW keine nennenswerten Querkräfte mehr erzeugt und auf die angeschlossene Rohrleitung übertragen werden.

Nicht zuletzt für den erwähnten Fall, daß das Trägerelement TS als Blindrohr ausgebildet ist, sind das Trägerelement TS und das Meßrohr M - wie auch aus einer Zusammenschau der Fig. 2-6 ohne weiteres ersichtlich - in vorteilhafter Weise zumindest hinsichtlich ihrer äußeren Konturen, möglichst aber auch hinsichtlich sämtlicher Abmessungen bzw. auch hinsichtlich der Materialien aus denen sie jeweils hergestellt sind, im wesentlichen baugleich ausgebildet. Demnach weist auch das Trägerelement TS - gleichermaßen wie das Meßrohr M - nach einer weiteren Ausgestaltung der Erfindung ein Symmetriezentrum ZTS auf, bezüglich dessen auch das Trägerelement TS punktsymmetrisch ist. Meßrohr M und Trägerelement TS sind in vorteilhafter Weise ferner beide derart punktsymmetrisch ausgebildet und so angeordnet, daß - wie auch aus der Zusammenschau der Fig. 4 und 5 ohne weiteres ersichtlich - das Symmetriezentrum ZM des Meßrohrs M und das Symmetriezentrum ZTS des Trägerelements TS zumindest in einer zwischen dem Meßrohr M dem Trägerelement TS, insb. zum Meßrohr M und/oder zum Trägerelement TS parallel, verlaufenden gedachten Projektionsebene PE des Meßwandlers koinzidieren, mithin ein mittels Meßrohr M und Trägerelement TS gebildetes Innenteil des Meßwandlers bezüglich eines in nämlicher gedachten Projektionsebene PE liegenden Symmetriezentrums ebenfalls punktsymmetrisch ist. Nach einer weiteren Ausgestaltung der Erfindung ist das Trägerelement TS zudem mittels eines zum Meßrohr M zumindest abschnittsweise parallel verlaufenden Blindrohrs, nämlich eines bestimmungsgemäß nicht vom zu messenden Medium durchströmbaren Rohres, gebildet, derart daß - wie auch aus der Fig. 5 bzw. 6 ohne weiteres ersichtlich - ein minimaler Abstand zwischen Meßrohr und nämlichem Trägerelement zumindest über einen sich zwischen dem ersten Schwingungssensor und dem Schwingungserreger erstreckenden Bereich gleichbleibend ist. Nach einer anderen Ausgestaltung der Erfindung sind sowohl das Meßrohr als auch das Trägerelement TS zumindest abschnittsweise S- bzw. Z-förmig gekrümmt und/oder zumindest abschnittsweise gerade ausgebildet; dies im besonderen in der Weise, daß wie aus einer Zusammenschau der Fig. 2 - 6 ohne weiteres ersichtlich, Meßrohr M und Trägerelement TS zumindest hinsichtlich ihrer äußeren Konturen, insb. aber auch hinsichtlich der jeweils verwendeten Materialien und/oder hinsichtlich ihrer gesamten Geometrie baugleich sind. Demnach kann das Trägerelement TS in einfacher Weise z.B. auch mittels eines zylindrischen Rohres mit einer Rohrwand und einem von nämlicher Rohrwand umschlossenen Lumen gebildet sein, etwa auch derart, daß das Lumen des Meßrohrs M und das Lumen des das Trägerelement TS bildenden Rohres gleich groß sind, und/oder daß eine Wanddicke der Rohrwand des das Trägerelement TS bildenden Rohres und die Wanddicke der Rohrwand des Meßrohrs M gleich groß sind, mithin können Meßrohr M und Trägerelement TS mittels zweier im wesentlichen gleicher Rohre hergestellt sein.

Das Trägerelement TE weist im hier gezeigten Ausführungsbeispiel ferner ein das erste Trägerende TE+ bildendes, beispielsweise mittels einer Platte oder eines Trichters gebildetes, erstes Endstück TE', ein das zweite Trägerende TE# bildendes, beispielsweise mittels einer Platte oder eines Trichters gebildetes, zweites Endstück TE" sowie ein sich zwischen den beiden, idealerweise baugleichen, Endstücken TE', TE" erstreckendes, insb. zylindrisches und/oder röhrenförmiges, Zwischenstück TE‴ auf. Nämliches Zwischenstück TE", mithin das damit hergestellte Trägerelement TE können, wie im hier Ausführungsbeispiel gezeigt, demnach auch mittels eines - hier zumindest abschnittsweise zylindrisch bzw. röhrenförmigen geformten - Hohlkörpers gebildet sein, beispielsweise derart, daß nämliches - mittels eines eine, insb. metallische, Rohrwand, beispielsweise aus einem Stahl, sowie ein von nämlicher Rohrwand umschlossenes Lumen aufweisenden, idealerweise zylindrischen Rohres gebildete - Trägerelement TE sowohl das Meßrohr M als auch das Trägerelement TS zumindest teilweise umhüllt, mithin ein Lumen aufweist, durch das sich sowohl das Meßrohr M als auch das Trägerelement TS jeweils zumindest teilweise erstrecken. Im Falle eines vergleichsweise weit ausladendenden, nämlich das Trägerelement TE seitlich überragenden gekrümmten Meßrohrs M bzw. Trägerelements TS sind in einer Seitenwand eines solchen, schlußendlich als Trägerelement TE dienenden Rohrkörpers dann selbstredend entsprechende Seitenöffnungen für Meßrohr M bzw. Trägerelement TS vorzusehen. Das Trägerelement TE kann - wie bei solchen Bauteilen von Meßwandlern der in Rede stehenden Art durchaus üblich - beispielsweise aus einem rostfreien Stahl hergestellt sein.

Das Trägerelement TE kann desweiteren als - entsprechend zumindest abschnittsweise zylindrisches - ein das Meßrohr und Trägerelement TS zusammen umhüllendes, ggf. mittels entsprechender Gehäusekappen für die allfällig seitlich herausragenden Abschnitte von Meßrohr M und Trägerelement TS komplettiertes Gehäuse des Meßwandlers dienen. Das Trägerelement TE kann aber auch, wie aus einer Zusammenschau der Fig. 1 - 6 ohne weiteres ersichtlich, als ein eigenständiges - dann ohne weiteres z.B. auch aus einem vergleichsweise kostengünstigen Automaten- oder Baustahl herstellbaren - Bauteil des Meßwandlers MW ausgebildet sein, das zusammen mit den anderen Komponenten des Meßwandlers, insb. auch dem Meßrohr M und dem Trägerelement TS, in einem ebenfalls als separates Bauteil des Meßwandlers MW ausgebildeten - hier vornehmlich als eine das Innere des Meßwandlers MW zur umgebenden Atmosphäre hin hermetisch abdichtende, ggf. auch druck- und/oder explosionsfest verschließende Schutzhülle dienenden - Meßwandlergehäuse HW untergebracht sind. Nämliches Meßwandlergehäuse HW kann beispielsweise aus einem - glatten oder auch gewellten - Edelstahlblech oder auch einem Kunststoff gefertigt sein. Ferner kann das Meßwandlergehäuse HW, wie auch in Fig. 1 angedeutet, einen entsprechende Anschlußstutzen aufweisen, an dem das Elektronikgehäuse HE unter Bildung eines Meßgeräts in Kompaktbauweise montiert ist. Innerhalb des Anschlußstutzen kann desweiteren eine, beispielsweise mittels Glas- und/oder Kunststoffverguß hergestellte, hermetisch dichte und/oder druckfeste Durchführung für zwischen der Meß- und Betriebselektronik und Meßwandlers verlegte elektrische Anschlußdrähte angeordnet sein. Das Meßwandlergehäuse HW kann - wie aus einer Zusammenschau der Fig. 2, 4 und 6 ohne weiteres ersichtlich - , etwa zwecks der Bereitstellung eines ein möglichst geringes Einbauvolumen einerseits und einer möglichst optimalen Ausnutzung nämlichen Einbauvolumens anderseits, zudem so relativ zum Trägerelement TE angeordnet sein, daß eine einer Symmetrieachse des Meßwandlergehäuses HW entsprechende Längsachse gegenüber einer einer Trägheitshauptachse des Trägerelements TE entsprechenden Längsachse um einen Winkel geneigt ist, der größer als 0° und kleiner als 10° ist.

Meßwandlern der in Rede stehenden Art, mithin auch dem erfindungsgemäßen, wohnen naturgemäß eine Vielzahl von jeweils eine Resonanzfrequenz aufweisenden Störmoden inne, nämlich solche Schwingungsmoden, deren Anregung zwecks Vermeidung von Störungen der Nutzschwingungen bzw. des wenigstens einen Schwingungssignals im Betrieb eigentlich nicht erwünscht ist. Von besonderem Interesse sind beim erfindungsgemäßen Meßwandler auch solche - im weiteren als Störmoden erster Art bezeichnete - Schwingungsmoden, in denen das Trägerelement TE jeweils Störschwingungen, nämlich jeweils Bewegungen relativ zum Meßrohrs bewirkende Schwingungen um seine statische Ruhelage ausführen kann, sowie solche - im weiteren als Störmoden zweiter Art bezeichnete - Schwingungsmoden, in denen das zweite Trägerelement jeweils Störschwingungen, nämlich jeweils Bewegungen relativ zum Meßrohrs bewirkende Schwingungen um seine statische Ruhelage ausführen kann. Zur Vermeidung eines eigentlich unerwünschten Anregens auch der Störmoden mittels des Schwingungserregrs E ist der Meßwandler nach einer weiteren Ausgestaltung der Erfindung ferner so ausgebildet, daß die Resonanzfrequenz sowohl jedes der Störmoden erster Art als auch jedes der Störmoden zweiter Art möglichst dauerhaft, insb. auch um jeweils mehr als 2 Hz, von der Resonanzfrequenz des Nutzmodes abweicht.

Dabei ist ferner zu berücksichtigen, daß anderseits die Resonanzfrequenz des Nutzmodes, mithin ist die Nutzfrequenz, nicht zuletzt infolge zeitlicher Änderungen der Dichte des im Betrieb des Meßwandlers bestimmungsgemäß im Lumen des Meßrohrs strömenden Mediums, naturgemäß innerhalb eines - sich je nach Anwendung über einige zehn oder sogar einige hundert Hertz erstreckendes - Nutzfrequenzintervalls veränderlich ist. Nämliches Nutzfrequenzintervall weist dabei eine untere Intervallgrenze, definiert durch einen kleinsten von der Nutzfrequenz nicht unterschrittenen Frequenzwert, sowie auch eine obere Intervallgrenze, definiert durch einen größten von der Nutzfrequenz nicht überschrittenen Frequenzwert, auf. Die Größe des Nutzfrequenzintervalls bzw. die Lage von dessen Intervallgrenzen ist dabei sowohl vom mechansichen Aufbau des Meßwandlers als auch von dem zu messenden Medium, mithin durch die für den Meßwandler vorgesehene Anwendung mitbestimmt.

Nicht zuletzt für den erwähnten Fall, daß das Trägerelement TS im wesentlichen baugleich zum Meßrohr M ausgebildet ist, wohnt dem Meßwandler u.a. auch ein dem Nutzmode ähnlicher erster Störmode zweiter Art inne, in dem das zweite Trägerelement nämlich solche Störschwingungen ausführen kann, die genauso viele Schwingungsbäuchen und Schwingungsknoten wie die Nutzschwingungen des Meßrohrs aufweisen. Zwecks Vermeidung einer unerwünschten Anregung nämlichen Störmodes zweiter Art ist gemäß einer weiteren Ausgestaltung der Erfindung der Meßwandler so ausgestaltet, daß der erste Störmode zweiter Art eine Resonanzfrequenz aufweist, die - möglichst dauerhaft bzw. stets - kleiner ist, insb. um mehr als 2 Hz, als die Resonanzfrequenz des Nutzmodes, mithin entsprechend kleiner ist als die untere Intervallgrenze des Nutzfrequenzintervalls Dies kann einerseits mittels des bereits erwähnten Federelements C erreicht werden, nachdem dieses naturgemäß eine Anhebung der Resonanzfrequenz des Nutzmodes, mithin der auch der Intervallgrenzen des Nutzfrequenzintervalls bewirkt. Alternativ oder in Ergänzung kann aber auch die Resonanzfrequenz des ersten Störmode zweiter Art dadurch weiter abgesenkt, mithin der Abstand zur unteren Intervallgrenze des Nutzfrequenzintervalls vergrößert werden, indem - wie auch in Fig. 4 und 5 schematisch dargestellt - ein quasi als Punktmasse wirkendes Trimmgewicht W am Trägerelement TS, beispielsweise auf einer vom Meßrohr abgewandten Seite nämlichen Trägerelements TS, angebracht ist. Die die Resonanzfrequenz des ersten Störmode zweiter Art absenkende Wirkung des Trimmgewicht W kann dabei dadurch optimiert werden, indem möglichst viel der vom Trimmgewicht W eingebrachten Masse an einem Ort maximaler Schwingungsamplitude der Schwingungen des Trägerelement TS zur Wirkung gelangt, beispielsweise also, wie in Fig. 4 bzw. schematisch angedeutet, in einem zentralen bzw. dem Schwingungserreger E gegenüberliegenden Abschnitt des Trägerelement TS.

Bei der Abstimmung von Meßrohr M und Trägerelement TS hinsichtlich der Intervallgrenzen des Nutzfrequenzintervalls bzw. der Resonanzfrequenz des ersten Störmode zweiter Art ist ferner zu berücksichtigen, daß dem Meßwandler naturgemäß auch ein zweiter Störmode zweiter Art innewohnt, in dem das zweite Trägerelement solche Störschwingungen ausführen kann, die einen Schwingungsbauch mehr, mithin einen Schwingungsknoten mehr als die Nutzschwingungen des Meßrohrs aufweisen. Gemäß einer weiteren Ausgestaltung der Erfindung ist ferner vorgesehen, Meßrohr M und Trägerelement TS so aufeinander abzustimmen, daß eine Resonanzfrequenz des zweite Störmodes zweiter Art, insb. um mehr als 2 Hz, größer als die obere Intervallgrenze des Nutzfrequenzintervalls, mithin dauerhaft größer als die Nutzfrequenz ist. Im Ergebnis dessen kann also das Trägerelement TS selbst zu keinem Zeitpunkt Resonanzschwingungen mit einer der Nutzfrequenz entsprechenden Resonanzfrequenz ausführen bzw. kann das Trägerelement TS allenfalls solche Resonanzschwingungen ausführen, die eine von der Nutzfrequenz stets abweichende Resonanzfrequenz aufweisen.

Nach einer weiteren Ausgestaltung der Erfindung sind Meßrohr M und Trägerelement TE aufeinander abgestimmt so ausgebildet, daß das Trägerelement TE eine größte Nachgiebigkeit aufweist, die kleiner als eine größte Nachgiebigkeit des Meßrohrs ist. Nach einer anderen Ausgestaltung der Erfindung sind zudem auch das Trägerelement TS und das das Trägerelement TE aufeinander abgestimmt so ausgebildet, daß das Trägerelement TE eine größte Nachgiebigkeit aufweist, die kleiner als eine größte Nachgiebigkeit des Trägerelements TS ist, so daß also umgekehrt das Trägerelement TE im Vergleich zu Meßrohr M und Trägerelement TS wesentlich steifer, insb. wesentlich bieg- und verwindungssteifer, ist. Dies kann für den vorbeschriebenen Fall, daß das Trägerelement TE mittels eines Rohres mit einer Rohrwand und einem von nämlicher Rohrwand umschlossenen Lumen gebildet ist sehr einfach dadurch realisiert werden, indem eine Wanddicke der Rohrwand des das erste Trägerelement TE bildenden Rohres größer als die - typischer weise mehr als 0.5 mm und weniger als 3 mm betragende - Wanddicke der Rohrwand des Meßrohrs ist; dies im besonderen derart, daß die - möglichst mehr als 3 mm betragende - Wanddicke der Rohrwand des das erste Trägerelement bildenden Rohres mehr als doppelt so groß ist wie die Wanddicke der Rohrwand des Meßrohrs M.

Wie bereits erwähnt, können Meßwandler vom Vibrationstyp mit nur einem einzigen -gekrümmten oder geraden - Meßrohr gelegentlich auch dann erhöhte Meßfehler aufweisen, wenn der Meßwandler über ein weites Nutzfrequenzintervall nahezu ideal ausbalanciert ist, nämlich betrieben werden kann, ohne selbst nennenswert unerwünschte Querkräfte infolge zeitlich ändernder Dichte zu erzeugen. Derartige Meßfehler können u.a. auch darauf zurück geführt werden, daß das Meßrohr M und das Trägerelement TS, mithin jede der beiden Sensorkomponenten ein und desselben Schwingungssensors tragenden Bauteile des Meßwandlers, auf eine von der angeschlossenen Rohrleitung auf das Trägerelement TE bzw. das damit allfällig gebildet Meßwandlergehäuse MW übertragene Störung, beispielsweise eine Vibration der Rohrleitung mit einer der Nutzfrequenz entsprechenden Frequenz unterschiedlich reagieren, mithin Meßwandler der in Rede stehenden Art gelegentlich eine für die angestrebte Meßgenauigkeit nicht ausreichende mechanische Gleichtaktunterdrückung aufweisen. Dies ist nicht zuletzt darin begründet, daß bei konventionellen Meßwandlern das Meßrohr M typischerweise in einer anderen Weise an das Trägerelement TE angekoppelt ist als das Trägerelement TS. Nach einer weiteren Ausgestaltung der Erfindung ist daher ferner vorgesehen, daß sowohl das Rohrende M+ als auch das Trägerende TS+ mit dem Trägerende TE+ und das sowohl das Rohrende M# als auch das Trägerende TS# mit dem Trägerende TE# mechanisch verbunden sind. Dies im besonderen in der Weise, daß sowohl das Rohrende M+ mit dem Trägerende TE+ starr, nämlich in einer Relativbewegungen zwischen Rohrende M+ und korrespondierendem Trägerende TE+ ausschließenden Weise, als auch das Rohrende M# mit dem Trägerende TE# starr, nämlich in einer Relativbewegungen zwischen Rohrende M# und korrespondierendem Trägerende TE# ausschließenden Weise, verbunden sind, und daß sowohl das Trägerende TS+ mit dem Trägerende TE+ starr, nämlich in einer Relativbewegungen zwischen Trägerende TS+ und korrespondierendem Trägerende TE+ ausschließenden Weise, als auch das Trägerende TS# mit dem Trägerende TE# starr, nämlich in einer Relativbewegungen zwischen Trägerende TS # und korrespondierendem Trägerende TE# ausschließenden Weise, verbunden sind. Idealerweise ist hierbei das Trägerende TE+ gleichermaßen starr mit dem korrespondierenden Rohrende M+ sowie mit dem korrespondierenden Trägerende TS+ verbunden, bzw. ist das Trägerende TE# gleichermaßen starr mit dem korrespondierenden Rohrende M# sowie mit dem korrespondierenden Trägerende TS# verbunden. Im Ergebnis einer solchen Ankopplung von Meßrohr M und Trägerelement TS an das Trägerelement TE können nämlich das Meßrohr M und das Trägerelement TS - wie in Fig. 9 schematisch - auf eine von außen via Trägerelement TE, beispielsweise via Trägerende TE+ und/oder via Trägerende TE#, zugleich auf Meßrohr M und Trägerelement TS übertragbare, eine Störfrequenz aufweisende Störschwingung mit einer - für die Messung der Massendurchflußrate unschädliche - Parallelschwingung, nämlich jeweils mit einer einen Abstand zwischen den beiden Sensorkomponenten S1', S1" nicht verändernden, jeweils eine der Störfrequenz entsprechende Frequenz aufweisende Schwingung zu reagieren; dies nicht zuletzt auch für den Fall, daß die Störfrequenz der Resonanzfrequenz des Nutzmodes, mithin der Nutzfrequenz entspricht. Je nach Art bzw. Wirkrichtung der jeweils in den Meßwandler eingetragenen Störung können nämliche Parallelschwingung ein oder mehr Schwingungsbäuche aufweisen, beispielsweise auch - wie in Fig. 9 lediglich exemplarisch dargestellt- zwei Schwingungsbäuche. Damit einhergehend können sowohl das Meßrohr und das Trägerelement TS jeweils auch eine den Coriolisschwingungen entsprechende Schwingungsform annehmen, ohne daß dies das Schwingungssignal beeinflussen würde.

## Patentansprüche

1. Meßwandler für ein Coriolis-Massendurchfluß-Meßgerät, welcher Meßwandler umfaßt:
- ein ein einlaßseitiges erstes Rohrende (M+) und ein auslaßseitiges zweites Rohrende (M#) aufweisendes, insb. bezüglich eines Symmetriezentrums (ZM) punktsymmetrisches und/oder zumindest abschnittsweise S-förmig gekrümmtes und/oder zumindest abschnittsweise gerades und/oder einziges, Meßrohr (M) mit einer eine vorgegebene Wanddicke aufweisenden Rohrwand und einem sich zwischen dessen ersten und zweiten Rohrende erstreckenden, von nämlicher Rohrwand umschlossenen Lumen, welches Meßrohr (M) dafür eingerichtet ist, in seinem Lumen ein strömendes Medium, insb. ein Gas und/oder eine Flüssigkeit, zu führen und währenddessen zum Erzeugen von Corioliskräften um eine statische Ruhelage schwingen gelassen zu werden;
- ein als ein das Meßrohr (M) umhüllendes Gehäuse ausgebildetes, insb. zumindest abschnittsweise zylindrisches, erstes Trägerelement (TE), das mit einem ersten Trägerende (TE+), insb. starr, mit dem ersten Rohrende (M+) des Meßrohrs (M) und mit einem zweiten Trägerende (TE#), insb. starr, mit dem zweiten Rohrend (M#) des Meßrohrs (M) mechanisch verbunden ist;
- ein mittels eines zum Meßrohr (M) baugleichen und/oder zum Meßrohr (M) zumindest abschnittsweise parallel verlaufenden Blindrohrs gebildetes, vom Meßrohr (M) seitlich beabstandetes zweites Trägerelement (TS), das sowohl mit einem ersten Trägerende (TS+) als auch mit einem zweiten Trägerende (TS#) mit dem ersten Trägerelement (TE) mechanisch gekoppelt ist;
- einen, insb. einzigen und/oder elektrodynamischen, Schwingungserreger (E)
-- mit einer außen am Meßrohr (M) fixierten, insb. mit dessen Rohrwand stoffschlüssig verbundenen und/oder mittels eines Permanentmagneten gebildeten, ersten Erregerkomponente (E') und
-- mit einer am ersten Trägerelement (TE) angebrachten, insb. auf einer dem Meßrohr (M) zugewandten Innenseite nämlichen Trägerelements (TE) plazierten und/oder mittels einer Zylinderspule gebildeten, zweiten Erregerkomponente (E"), sowie
- wenigstens einen, insb. elektrodynamischen, ersten Schwingungssensor (S1)
-- mit einer außen am Meßrohr (M) fixierten, insb. mit dessen Rohrwand stoffschlüssig verbundenen und/oder mittels eines Permanentmagneten gebildeten, ersten Sensorkomponente (S1') und
-- mit einer am zweiten Trägerelement (TS) angebrachten, insb. mittels einer Zylinderspule gebildeten, zweiten Sensorkomponente (S1"),
und welcher Meßwandler weiters umfaßt:
- ein sowohl mit dem Meßrohr (M) als auch mit dem ersten Trägerelement (TE) mechanisch gekoppeltes, insb. mittels einer Blattfeder gebildetes, Federelement (C), das dafür eingerichtet ist, infolge einer Bewegung des Meßrohrs (M) relativ zum ersten Trägerelement (TE) elastisch verformt zu werden,
- und/oder ein am zweiten Trägerelement (TS), insb. auf einer vom Meßrohr (M) abgewandten Seite nämlichen Trägerelements (TS), angebrachtes Trimmgewicht (W);
- wobei dem Meßwandler ein eine Resonanzfrequenz aufweisender Nutzmode, nämlich ein Schwingungsmode innewohnt, in dem das Meßrohr (M) Nutzschwingungen, nämlich für das Erzeugen von Corioliskräften geeignete Schwingungen um seine statische Ruhelage mit einer Nutzfrequenz, nämlich einer der Resonanzfrequenz des Nutzmodes entsprechenden Frequenz, ausführen kann, insb. derart, daß die Nutzschwingungen des Meßrohrs (M) vier Schwingungsknoten, mithin drei Schwingungsbäuche aufweisen;
- wobei der Schwingungserreger (E) dafür eingerichtet ist, nämliche Nutzschwingungen des Meßrohrs (M) anzuregen;
- und wobei der erste Schwingungssensor (S1) dafür eingerichtet ist, Bewegungen des Meßrohrs (M) relativ zum zweiten Trägerelement (TS) zu erfassen, insb. Bewegungen von Schwingungen des Meßrohrs (M) mit der Nutzfrequenz, und in ein Schwingungen des Meßrohrs (M) repräsentierendes erstes Schwingungssignal zu wandeln.

2. Meßwandler gemäß einem der vorherigen Ansprüche,
- wobei der Meßwandler außer dem Schwingungserreger keinen Schwingungserreger mit einer am ersten Trägerelement angebrachten Erregerkomponente aufweist; und/oder
- wobei der Meßwandler keinen Schwingungserreger mit einer am zweiten Trägerelement angebrachten Erregerkomponente aufweist; und/oder
- wobei der Meßwandler außer dem Meßrohr kein Rohr aufweist, das dafür eingerichtet ist, in einem Lumen ein strömendes Medium zu führen und währenddessen um eine statische Ruhelage schwingen gelassen zu werden.

3. Meßwandler gemäß einem der vorherigen Ansprüche,
- wobei das erste Trägerelement dafür eingerichtet ist, in den Verlauf einer Rohrleitung eingesetzt zu werden, derart, daß das Lumen des Meßrohrs unter Bildung eines Strömungspfades mit einem Lumen nämlicher Rohrleitung kommuniziert; und/oder
- wobei das erste Trägerelement mittels eines, insb. zumindest abschnittsweise zylindrischen und/oder röhrenförmigen und/oder sowohl das Meßrohr als auch das zweite Trägerelement zumindest teilweise umhüllenden, Hohlkörpers gebildet ist; und/oder
- wobei das erste Trägerelement ein Lumen aufweist, durch das sich sowohl das Meßrohr als auch das zweite Trägerelement erstrecken; und/oder
- wobei das erste Trägerelement ein das erste Trägerende bildendes erstes Endstück, ein das zweite Trägerende bildendes zweites Endstück sowie ein sich zwischen den beiden, insb. baugleichen, Endstücken, insb. unter Bildung eines sowohl das Meßrohr als auch das zweite Trägerelement zumindest teilweise umhüllenden Hohlkörpers, erstreckendes, insb. zylindrisches und/oder röhrenförmig, Zwischenstück aufweist; und/oder
- wobei das erste Trägerelement eine größte Nachgiebigkeit aufweist, die kleiner als eine größte Nachgiebigkeit des Meßrohrs ist; und/oder
- wobei das erste Trägerelement eine größte Nachgiebigkeit aufweist, die kleiner als eine größte Nachgiebigkeit des zweiten Trägerelements ist; und/oder
- wobei das erste Trägerende (TE+) des ersten Trägerelements (TE) einen Anschlußflansch (F+), in den das erste Rohrende des Meßrohrs mündet, und das zweite Trägerende (TE#) des ersten Trägerelements (TE) einen Anschlußflansch (F#), in den das zweite Rohrende des Meßrohrs mündet, aufweisen; und/oder
- wobei das zweite Trägerelement mit seinem ersten Trägerende, insb. starr, mit dem ersten Trägerende des ersten Trägerelements mechanisch verbunden und das zweite Trägerelement mit seinem zweiten Trägerende, insb. starr, mit dem zweiten Trägerende des ersten Trägerelements mechanisch verbunden sind.

4. Meßwandler gemäß einem der vorherigen Ansprüche,
- wobei das erste Trägerelement mittels eines zylindrischen Rohres mit einer Rohrwand und einem von nämlicher Rohrwand umschlossenen Lumen gebildet ist, insb. derart, daß Meßrohr und zweites Trägerelement jeweils zumindest teilweise innerhalb eines Lumens nämlichen Rohres angeordnet sind, und/oder daß eine Wanddicke der Rohrwand des das erste Trägerelement bildenden Rohres größer als die Wanddicke der Rohrwand des Meßrohrs ist; und
- wobei eine Wanddicke der Rohrwand des das erste Trägerelement bildenden Rohres größer als die Wanddicke der Rohrwand des Meßrohr ist, insb. derart, daß die Wanddicke der Rohrwand des das erste Trägerelement bildenden Rohres mehr als doppelt so groß ist wie die Wanddicke der Rohrwand des Meßrohrs, und/oder daß die Wanddicke der Rohrwand des Meßrohrs mehr als 0.5 mm und weniger als 3 mm und die Wanddicke der Rohrwand des das erste Trägerelement bildenden Rohres mehr als 3 mm betragen.

5. Meßwandler gemäß einem der vorherigen Ansprüche, weiters umfassend:
- einen, insb. elektrodynamischen und/oder zum ersten Schwingungssensor baugleichen, zweiten Schwingungssensor (S2)
-- mit einer von der ersten Sensorkomponente des ersten Schwingungssensors beabstandet außen am Meßrohr fixierten, insb. mit dessen Rohrwand stoffschlüssig verbundenen und/oder mittels eines Permanentmagneten gebildeten und/oder zur ersten Sensorkomponente des ersten Schwingungssensors baugleichen, ersten Sensorkomponente (S2') und
-- mit einer von der zweiten Sensorkomponente des ersten Schwingungssensors beabstandet am zweiten Trägerelement angebrachten, insb. mittels einer Zylinderspule gebildeten und/oder zur zweiten Sensorkomponente des ersten Schwingungssensors baugleichen, zweiten Sensorkomponente (S2");
- wobei der Meßwandler außer dem ersten und zweiten Schwingungssensor keinen Schwingungssensor mit einer am zweiten Trägerelement angebrachten Sensorkomponente aufweist; und/oder
- wobei der zweite Schwingungssensor dafür eingerichtet ist, Bewegungen des Meßrohrs relativ zum zweiten Trägerelement zu erfassen, insb. Bewegungen von Schwingungen des Meßrohrs mit Nutzfrequenz, und in ein Schwingungen des Meßrohrs repräsentierendes zweites Schwingungssignal zu wandeln, insb. derart, daß zwischen dem ersten und zweiten Sensorsignal eine mit einer Massendurchflußrate eines im Lumen des Meßrohrs strömenden Mediums korrespondierende Phasendifferenz meßbar ist.

6. Meßwandler gemäß einem der vorherigen Ansprüche,
- wobei die Nutzfrequenz, insb. infolge zeitlicher Änderungen einer Dichte eines im Lumen des Meßrohrs strömenden Mediums, innerhalb eines Nutzfrequenzintervalls veränderlich ist;
- und wobei das Nutzfrequenzintervall eine untere Intervallgrenze, definiert durch einen kleinsten von der Nutzfrequenz nicht unterschrittenen Frequenzwert, aufweist.

7. Meßwandler gemäß dem vorherigen Anspruch,
- wobei die Nutzschwingungen des Meßrohrs, insb. genau, vier, insb. in zumindest einer gedachten Projektionsebene des Meßwandlers auf einer das erste Rohrende und das zweite Rohrende miteinander imaginär verbindenden gedachten Schwingungsachse liegende, Schwingungsknoten bzw., insb. genau, drei Schwingungsbäuche aufweisen.

8. Meßwandler gemäß einem der vorherigen Ansprüche,
- wobei das Federelement ein mit dem Meßrohr, insb. an einem auf einer auch die erste Erregerkomponente imaginär berührenden gedachten kreisförmigen Umfangslinie des Meßrohrs liegenden Befestigungspunkt (c') und/oder starr, verbundenes erstes Ende (C+) aufweist; und
- wobei das Federelement ein mit dem ersten Trägerelement, insb. an einem von der zweiten Erregerkomponente seitlich beabstandeten Befestigungspunkt (c") und/oder starr, verbundenes zweites Ende (C#) aufweist.

9. Meßwandler gemäß einem der vorherigen Ansprüche, wobei das Meßrohr und das zweite Trägerelement dafür eingerichtet sind, auf eine von außen via erstes Trägerelement, insb. nämlich via erstes Trägerende des ersten Trägerelements und/oder via zweites Trägerende des ersten Trägerelements, zugleich auf Meßrohr und zweites Trägerelement übertragbare, eine - insb. der Resonanzfrequenz des Nutzmodes entsprechende - Störfrequenz aufweisende Störschwingung mit einer Parallelschwingung, nämlich jeweils mit einer einen Abstand zwischen der ersten und zweiten Sensorkomponente nicht verändernden, jeweils eine der Störfrequenz entsprechende Frequenz aufweisende Schwingung zu reagieren.

10. Meßwandler gemäß einem der vorherigen Ansprüche,
- wobei das erste Trägerende des ersten Trägerelements und das erste Trägerende des zweiten Trägerelements starr, nämlich in einer Relativbewegungen des ersten Trägerendes des ersten Trägerelements und des ersten Trägerendes des zweiten Trägerelements verhindernden Weise, miteinander verbunden sind, und
- wobei das zweite Trägerende des ersten Trägerelements und das zweite Trägerende des zweiten Trägerelements starr, nämlich in einer Relativbewegungen des zweiten Trägerendes des ersten Trägerelements und des zweiten Trägerendes des zweiten Trägerelements verhindernden Weise, miteinander verbunden sind.

11. Meßwandler gemäß einem der vorherigen Ansprüche,
- wobei das erste Trägerende des ersten Trägerelements gleichermaßen starr mit dem ersten Rohrende des Meßrohrs sowie mit dem ersten Trägerende des zweiten Trägerelements verbunden ist, und
- wobei das zweite Trägerende des ersten Trägerelements gleichermaßen starr mit dem zweiten Rohrende des Meßrohrs sowie mit dem zweiten Trägerende des zweiten Trägerelements verbunden ist.

12. Meßwandler gemäß einem der vorherigen Ansprüche,
- wobei das erste Trägerende des ersten Trägerelements mit dem ersten Rohrende des Meßrohrs und mit dem ersten Trägerende des zweiten Trägerelements in einer Bewegungen des ersten Rohrendes des Meßrohrs relativ zum ersten Trägerende des zweiten Trägerelements verhindernden Weise mechanisch verbunden ist, und
- wobei das zweite Trägerende des ersten Trägerelements mit dem zweiten Rohrende des Meßrohrs und mit dem zweiten Trägerende des zweiten Trägerelements in einer Bewegungen des zweiten Rohrendes des Meßrohrs relativ zum zweiten Trägerende des zweiten Trägerelements verhindernden Weise mechanisch verbunden ist.

13. Meßwandler gemäß einem der vorherigen Ansprüche,
- wobei das Meßrohr und zweite Trägerelement zueinander parallel verlaufen, insb. derart, daß ein minimaler Abstand zwischen Meßrohr und nämlichem Trägerelement zumindest über einen sich zwischen dem ersten Schwingungssensor und dem Schwingungserreger erstreckenden Bereich gleichbleibend ist; und/oder
- wobei das Meßrohr zumindest abschnittsweise S- bzw. Z-förmig gekrümmt und/oder zumindest abschnittsweise gerade ist; und/oder
- wobei das zweite Trägerelement zumindest abschnittsweise S- bzw. Z-förmig gekrümmt und/oder zumindest abschnittsweise gerade ist; und/oder
- wobei das zweite Trägerelement mittels eines zylindrischen Rohres mit einer Rohrwand und einem von nämlicher Rohrwand umschlossenen Lumen gebildet ist, insb. derart, daß das Lumen des Meßrohrs und das Lumen des das zweite Trägerelement bildenden Rohres gleich groß sind, und/oder daß eine Wanddicke der Rohrwand des das zweite Trägerelement bildenden Rohres und die Wanddicke der Rohrwand des Meßrohrs gleich groß sind.

14. Meßwandler gemäß einem der vorherigen Ansprüche,
- wobei das Meßrohr ein Symmetriezentrum aufweist, bezüglich dessen das Meßrohr punktsymmetrisch ist;
- wobei das zweite Trägerelement ein Symmetriezentrum aufweist, bezüglich dessen das zweite Trägerelement punktsymmetrisch ist;
- und wobei das Symmetriezentrum des Meßrohrs und das Symmetriezentrum des zweiten Trägerelements zumindest in einer zwischen dem Meßrohr dem zweiten Trägerelement, insb. zum Meßrohr und/oder zum zweiten Trägerelement parallel, verlaufenden gedachten Projektionsebene des Meßwandlers koinzidieren.

15. Meßsystem, insb. zum Messen einer Massendurchflußrate und/oder eines Massendurchlfusses eines in einer Rohrleitung strömenden Mediums, umfassend: einen Meßwandler gemäß einem der vorherigen Ansprüche sowie eine an nämlichen Meßwandler elektrisch angeschlossene Meß- und Betriebselektronik.

## Claims

1. Transducer for a Coriolis mass flowmeter, wherein said transducer comprises:
- a measuring tube (M) with a first tube end (M+) on the inlet side and a second tube end (M#) on the outlet side, particularly with point symmetry in relation to a symmetry center (ZM) and/or being at least partially curved in the shape of an S and/or at least partially straight and/or a single tube,
with a tube wall with a predefined wall thickness and an interior channel extending between the first and second tube end, wherein said channel is surrounded by said tube wall, wherein said measuring tube (M) is designed to conduct a flowing medium in its interior channel, particularly a gas and/or a liquid, and to be allowed to vibrate during this time around a static rest position for the purpose of generating Coriolis forces;
- a first support element (TE), that is at least partially cylindrical, formed as a housing surrounding the measuring tube, wherein said element is connected mechanically by a first support end (TE+), particularly in a rigid manner, to the first tube end (M+) of the measuring tube (M) and by a second support end (TE#), particularly, in a rigid manner to the second tube end (M#) of the measuring tube (M);
- a second support element (TS), formed by means of a blind pipe that has an identical design to the measuring tube (M) and/or extends parallel to the measuring tube at least in part, spaced at a lateral distance from the measuring tube (M), wherein said element is coupled mechanically by both a first support end (TS+) and by a second support end (TS#) to the first support element (TE+);
- a vibration exciter (E), particularly a single exciter and/or electrodynamic
-- with a first exciter component (E') mounted on the outside of the measuring tube (M), particularly connected via a substance-to-substance connection to the wall of said tube and/or formed by means of a permanent magnet, and
-- with a second exciter component (E") mounted on the first support element (TE), placed particularly on an inside of said support element (TE) facing towards the measuring tube and/or formed by means of a cylindrical coil, and
- at least a first vibration sensor (S1), particularly electrodynamic;
-- with a first sensor component (S1') fixed on the outside of the measuring tube (M), particularly connected to the wall of said tube by a substance-to-substance connection and/or formed by means of a permanent magnet, and
-- with a second sensor component (S1") fitted on the second support element (TS), particularly formed by means of a cylindrical coil,
and said transducer further comprising:
- a spring element (C) mechanically coupled to both the measuring tube (M) and the first support element (TE), wherein said element is particularly formed by means of a leaf spring, wherein said element is designed to be deformed elastically by a movement of the measuring tube in relation to the first support element (TE),
- and/or a trim weight (W) fitted on the second support element (TS), particularly on a side of said support element (TS) facing away from the measuring tube (M)
- wherein the transducer has an inherent useful mode, particularly a vibration mode, having a resonance frequency, wherein in said mode the measuring tube (M) can perform useful vibrations, particularly vibrations that are appropriate for the generation of Coriolis forces around its static rest position with a useful frequency, particularly a frequency corresponding to the resonance frequency of the useful mode, particularly in such a way that the useful vibrations of the measuring tube have four vibration nodes, and consequently three antinodes;
- wherein the vibration exciter (E) is designed to excite said useful vibrations of the measuring tube (M);
- and wherein the first vibration sensor is designed to detect movements of the measuring tube (M) in relation to the second support element (TS), particularly movements of vibrations of the measuring tube at the useful frequency, and to convert them to a first vibration signal representing vibrations of the measuring tube (M).

2. Transducer as claimed in one of the previous claims,
- wherein, with the exception of the vibration exciter, the transducer does not have a vibration exciter with an exciter component mounted on the first support element; and/or
- wherein the transducer does not have a vibration exciter with an exciter component mounted on the second support element; and/or
- wherein, with the exception of the measuring tube, the transducer does not have a tube that is designed to conduct a medium flowing in an interior channel and to be made to vibrate, during this time, around a static rest position.

3. Transducer as claimed in one of the previous claims
- wherein the first support element is designed to be inserted in the course of a pipe in such a way that the interior channel of the measuring tube communicates with an interior channel of said pipe by forming a flow path; and/or
- wherein the first support element is formed by means of a hollow body, particularly at least partially cylindrical and/or tubular and/or at least partially surrounding both the measuring tube and the second support element; and/or
- wherein the first support element has an interior channel through which both the measuring tube and the second support element extend; and/or
- wherein the first support element has a first end piece forming the first support end, a second end piece forming the second support end and an intermediate piece, particularly cylindrical and/or tubular, extending between the two end pieces, particularly identical in design, particularly forming a hollow body at least partially surrounding both the measuring tube and the second support element; and/or
- wherein the first support element has a maximum flexibility that is less than a maximum flexibility of the measuring tube; and/or
- wherein the first support element has a maximum flexibility that is less than a maximum flexibility of the second support element; and/or
- wherein the first support end (TE+) of the first support element (TE) has a connection flange (F+) into which the first tube end of the measuring tube enters, and
wherein the second support end (TE#) of the first support element (TE) has a connection flange (F#) into which the second tube end of the measuring tube enters; and/or
- wherein the second support element is mechanically connected by its first support end, particularly in a rigid manner, to the first support end of the first support element, and
wherein the second support element is mechanically connected by its second support end, particularly in a rigid manner, to the second support end of the first support element.

4. Transducer as claimed in one of the previous claims,
- wherein the first support element is formed by means of a cylindrical tube with a tube wall and an interior channel surrounded by said tube wall, particularly in such a way that the measuring tube and the second support element are respectively arranged at least partially inside an interior channel of said tube, and/or that a wall thickness of the tube wall forming the first support element is greater than the wall thickness of the tube wall of the measuring tube; and
- wherein a wall thickness of the tube wall of the tube forming the first support element is greater than the wall thickness of the tube wall of the measuring tube, particularly in such a way that the wall thickness of the tube wall of the tube forming the first support element is more than twice as big as the wall thickness of the tube wall of the measuring tube, and/or in that the wall thickness of the wall of the measuring tube is greater than 0.5 mm and less than 3 mm and the wall thickness of the tube wall of the tube forming the first support element is greater than 3 mm.

5. Transducer as claimed in one of the previous claims, further comprising:
- a second vibration sensor (S2), particularly electrodynamic and/or identical in design to the first vibration sensor
-- with a first sensor component (S2') fixed on the outside of the measuring tube at a distance from the first sensor component of the first vibration sensor, particularly connected to the wall of said tube by means of a substance-to-substance connection and/or formed by means of a permanent magnet and/or identical in design to the first sensor component of the first vibration sensor and
-- with a second sensor component (S2") mounted on the second support element at a distance from the second sensor component of the first vibration sensor, formed particularly by means of a cylindrical coil and/or identical in design to the second sensor component of the first vibration sensor;
- wherein, with the exception of the first and the second vibration sensor, the transducer does not have a vibration sensor with a sensor component mounted on the second support element; and/or
- wherein the second vibration sensor is designed to detect movements of the measuring tube in relation to the second support element, particularly movements of vibrations of the measuring tube at the useful frequency, and to convert them to a second vibration signal representing vibrations of the measuring tube, particularly in such a way that a phase difference corresponding to a mass flow rate of a medium flowing in the interior channel of the measuring tube can be measured between the first and the second sensor signal.

6. Transducer as claimed in one of the previous claims,
- wherein the useful frequency is variable within a useful frequency interval, particularly as a result of changes over time of a density of a medium flowing in the interior channel of the measuring tube;
- and wherein the useful frequency interval has a lower interval limit, defined by a lowest frequency value that is not undershot by the useful frequency.

7. Transducer as claimed in the previous claim,
- wherein the useful vibrations of the measuring tube have, particularly exactly, four vibration nodes, particularly in at least one imaginary projection plane of the transducer on an imaginary vibration axis connecting in an imaginary manner the first end of the tube and the second end of the tube, or, particularly exactly, three antinodes.

8. Transducer as claimed in one of the previous claims,
- wherein the spring element has a first end (C+) that is connected to the measuring tube, particularly at a fixation point (c') located on an imaginary circular circumferential line of the measuring tube touching the first exciter component in an imaginary manner and/or in a rigid manner; and
- wherein the spring element has a second end (C#) that is connected to the first support element, particularly at a fixation point (c") spaced laterally from the second exciter component, and/or in a rigid manner.

9. Transducer as claimed in one of the previous claims, wherein the measuring tube (M) and the second support element are designed to react to an interference vibration, which has an interference frequency - corresponding particularly to the resonance frequency of the useful mode - and can be transmitted from the outside via the first support element (TE), particularly via the first support end of the first support element and/or via the second support end of the first support element, simultaneously to the measuring tube and to the second support element (TS), with a parallel vibration, specifically with a vibration that does not modify a distance between the first and the second sensor components and having a frequency that corresponds to the interference frequency.

10. Transducer as claimed in one of the previous claims,
- wherein the first end of the first support element and the first end of the second support element are connected in a rigid manner to one another, i.e. in a manner that impedes relative movements of the first end of the first support element and the first end of the second support element, and
- wherein the second end of the first support element and the second end of the second support element are connected with one another in a rigid manner, i.e. in a manner that prevents relative movements of the second end of the first support element and the second end of the second support element.

11. Transducer as claimed in one of the previous claims,
- wherein the first end of the first support element is connected in an equally rigid manner to the first end of the measuring tube and to the first end of the second support element, and
- wherein the second end of the first support element is connected in an equally rigid manner to the second end of the measuring tube and to the second end of the second support element.

12. Transducer as claimed in one of the previous claims,
- wherein the first end of the first support element is connected mechanically to the first end of the measuring tube and to the first end of the second support element in a manner that prevents movements of the first end of the measuring tube in relation to the first end of the second support element, and
- wherein the second end of the first support element is connected mechanically to the second end of the measuring tube and to the second end of the second support element in a manner that prevents movements of the second end of the measuring tube in relation to the second end of the second support element.

13. Transducer as claimed in one of the previous claims,
- wherein the measuring tube and the second support element are parallel to one another, particularly in such a way that a minimum distance between the measuring tube and said support element is constant at least in an area extending between the first vibration sensor and the vibration exciter; and/or
- wherein the measuring tube is at least partially curved in the form of an S or Z and/or at least partially straight; and/or
- wherein the second support element is at least partially curved in the form of a S or Z and/or at least partially straight; and/or
- wherein the second support element is formed by means of a cylindrical tube with a tube wall and an interior channel surrounded by said tube wall, particularly in such a way that the interior channel of the measuring tube and the interior channel of the tube forming the second support element are the same size, and/or that a wall thickness of the pipe wall of the tube forming the second support element and the wall thickness of the tube wall of the measuring tube are the same size.

14. Transducer as claimed in one of the previous claims,
- wherein the measuring tube has a symmetry center in relation to which the measuring tube is in point symmetry;
- wherein the second support element has a symmetry center in relation to which the second support element is in point symmetry;
- and wherein the symmetry center of the measuring tube and the symmetry center of the second support element coincide at least on an imaginary projection plane of the transducer extending between the measuring tube and the second support element, particularly parallel to the measuring tube and/or to the second support element.

15. Measuring system, particularly designed to measure a mass flow rate and/or a mass flow of a medium flowing through a pipe, wherein said system comprises: a transducer as claimed in one of the previous claims as well as a measuring and operating electronics unit that is electrically connected to said transducer.

## Revendications

1. Transducteur pour un débitmètre massique Coriolis, lequel transducteur comprend :
- un tube de mesure (M) présentant une première extrémité de tube (M+) côté entrée et une deuxième extrémité de tube (M#) côté sortie, notamment à symétrie ponctuelle par rapport à un centre de symétrie (ZM) et/ou au moins partiellement courbé en forme de S et/ou au moins partiellement droit et/ou unique,
avec une paroi de tube présentant une épaisseur de paroi prédéfinie et un canal intérieur s'étendant entre sa première et sa deuxième extrémité de tube, lequel canal est entouré de ladite paroi de tube, lequel tube de mesure (M) est conçu pour guider dans son canal intérieur un produit en écoulement, notamment un gaz et/ou un liquide, et pour être laissé vibrer pendant ce temps autour d'une position de repos statique afin de générer des forces de Coriolis ;
- un premier élément de support (TE) notamment au moins partiellement cylindrique, réalisé sous la forme d'un boîtier enveloppant le tube de mesure, lequel élément est relié mécaniquement par une première extrémité de support (TE+), notamment de manière rigide, à la première extrémité de tube (M+) du tube de mesure (M) et par une deuxième extrémité de support (TE#), notamment de manière rigide, à la deuxième extrémité de tube (M#) du tube de mesure (M) ;
- un deuxième élément de support (TS), formé notamment au moyen d'un tube borgne de construction identique au tube de mesure (M) et/ou s'étendant parallèlement au tube de mesure au moins par tronçons, espacé latéralement du tube de mesure (M), lequel élément est relié mécaniquement à la fois par une première extrémité de support (TS+) et par une deuxième extrémité de support (TS#) au premier élément de support (TE) ;
- un excitateur de vibrations (E), notamment unique et/ou électrodynamique ; et
-- avec un premier composant d'excitation (E') fixé à l'extérieur du tube de mesure M), lequel composant est notamment relié par liaison de matière à la paroi dudit tube et/ou est formé au moyen d'un aimant permanent, et
-- avec un deuxième composant d'excitation (E") monté sur le premier élément de support (TE), notamment placé sur une face intérieure du même élément de support (TE) tournée vers le tube de mesure (M) et/ou formé au moyen d'une bobine cylindrique, ainsi que
- au moins un premier capteur de vibrations (S1), notamment électrodynamique ;
-- avec un premier composant de capteur (S1') fixé à l'extérieur du tube de mesure (M), notamment relié à la paroi de ce tube par une liaison de matière et/ou formé au moyen d'un aimant permanent, et
-- avec un deuxième composant de capteur (S1 ") fixé sur le deuxième élément de support (TS) et formé notamment au moyen d'une bobine cylindrique,
et lequel transducteur comprend en outre :
- un élément élastique (C) couplé mécaniquement aussi bien au tube de mesure (M) qu'au premier élément de support (TE), lequel élément élastique est formé notamment au moyen d'un ressort à lame, qui est conçu pour être déformé élastiquement suite à un mouvement du tube de mesure (M) par rapport au premier élément de support (TE),
- et/ou un poids d'ajustage (W) fixé sur le deuxième élément de support (TS), notamment sur un côté du même élément de support (TS) opposé au tube de mesure (M)
- un mode utile, notamment un mode de vibration, présentant une fréquence de résonance, étant inhérent au transducteur, mode dans lequel le tube de mesure (M) peut exécuter des vibrations utiles, notamment des vibrations appropriées pour la génération de forces de Coriolis autour de sa position de repos statique avec une fréquence utile, notamment une fréquence correspondant à la fréquence de résonance du mode utile, notamment de telle sorte que les vibrations utiles du tube de mesure présentent quatre noeuds de vibration, soit trois ventres de vibration ;
- l'excitateur de vibrations (E) étant conçu pour exciter lesdites vibrations utiles du tube de mesure (M) ;
- et le premier capteur de vibrations étant conçu pour détecter des mouvements du tube de mesure (M) par rapport au deuxième élément de support (TS), notamment des mouvements de vibrations du tube de mesure (M) à la fréquence utile, et pour les convertir en un premier signal de vibration représentant des vibrations du tube de mesure.

2. Transducteur selon l'une des revendications précédentes,
- pour lequel le transducteur ne comporte pas, outre l'excitateur de vibrations, d'excitateur de vibrations avec un composant d'excitation monté sur le premier élément de support ; et/ou
- pour lequel le transducteur ne comporte pas d'excitateur de vibrations avec un composant d'excitation monté sur le deuxième élément de support ; et/ou
- pour lequel le transducteur ne comporte pas, outre le tube de mesure, de tube conçu pour guider un produit en écoulement dans un canal intérieur et pour être laissé vibrer autour d'une position de repos statique pendant ce temps.

3. Transducteur selon l'une des revendications précédentes
- pour lequel le premier élément de support est conçu pour être inséré dans le trajet d'une conduite, de telle sorte que le canal intérieur du tube de mesure communique avec un canal intérieur de la même conduite en formant un trajet d'écoulement ; et/ou
- pour lequel le premier élément de support est formé au moyen d'un corps creux, notamment au moins partiellement cylindrique et/ou tubulaire et/ou enveloppant au moins partiellement aussi bien le tube de mesure que le deuxième élément de support ; et/ou
- pour lequel le premier élément de support présente un canal intérieur à travers lequel s'étendent aussi bien le tube de mesure que le deuxième élément de support ; et/ou
- pour lequel le premier élément de support présente une première pièce d'extrémité formant la première extrémité de support, une deuxième pièce d'extrémité formant la deuxième extrémité de support ainsi qu'une pièce intermédiaire, notamment cylindrique et/ou tubulaire, s'étendant entre les deux pièces d'extrémité, notamment de construction identique, notamment en formant un corps creux enveloppant au moins partiellement aussi bien le tube de mesure que le deuxième élément de support ; et/ou
- pour lequel le premier élément de support présente une flexibilité maximale qui est inférieure à une flexibilité maximale du tube de mesure ; et/ou
- pour lequel le premier élément de support présente une flexibilité maximale qui est inférieure à une flexibilité maximale du deuxième élément de support ; et/ou
- pour lequel la première extrémité de support (TE+) du premier élément de support (TE) présente une bride de raccordement (F+) dans laquelle débouche la première extrémité du tube de mesure, et
pour lequel la deuxième extrémité de support (TE#) du premier élément de support (TE) présente une bride de raccordement (F#) dans laquelle débouche la deuxième extrémité du tube de mesure ; et/ou
- pour lequel le deuxième élément de support est relié mécaniquement par sa première extrémité de support, notamment de manière rigide, à la première extrémité de support du premier élément de support, et
pour lequel le deuxième élément de support est relié mécaniquement par sa deuxième extrémité de support, notamment de manière rigide, à la deuxième extrémité de support du premier élément de support.

4. Transducteur selon l'une des revendications précédentes,
- pour lequel le premier élément de support est formé au moyen d'un tube cylindrique avec une paroi de tube et un canal intérieur entouré par la même paroi de tube, notamment de telle sorte que le tube de mesure et le deuxième élément de support sont respectivement disposés au moins partiellement à l'intérieur d'un canal intérieur du même tube, et/ou qu'une épaisseur de paroi de la paroi du tube formant le premier élément de support est supérieure à l'épaisseur de la paroi du tube de mesure ; et
- pour lequel une épaisseur de paroi du tube formant le premier élément de support est supérieure à l'épaisseur de paroi du tube de mesure, notamment de telle sorte que l'épaisseur de paroi du tube formant le premier élément de support soit plus de deux fois supérieure à l'épaisseur de paroi du tube de mesure, et/ou que l'épaisseur de paroi du tube de mesure soit supérieure à 0,5 mm et inférieure à 3 mm et l'épaisseur de paroi du tube formant le premier élément de support soit supérieure à 3 mm.

5. Transducteur selon l'une des revendications précédentes, comprenant en outre :
- un deuxième capteur de vibrations (S2), notamment électrodynamique et/ou de construction identique au premier capteur de vibrations
-- avec un premier composant de capteur (S2') fixé à distance du premier composant de capteur du premier capteur de vibrations à l'extérieur du tube de mesure, notamment relié à la paroi de ce tube par une liaison de matière et/ou formé au moyen d'un aimant permanent et/ou de construction identique au premier composant de capteur du premier capteur de vibrations et
-- avec un deuxième composant de capteur (S2") monté sur le deuxième élément de support à distance du deuxième composant de capteur du premier capteur de vibrations, formé notamment au moyen d'une bobine cylindrique et/ou de construction identique au deuxième composant de capteur du premier capteur de vibrations ;
- le transducteur ne présentant pas, en dehors du premier et du deuxième capteur de vibrations, de capteur de vibrations avec un composant de capteur monté sur le deuxième élément de support ; et/ou
- le deuxième capteur de vibrations étant conçu pour détecter des mouvements du tube de mesure par rapport au deuxième élément de support, notamment des mouvements de vibrations du tube de mesure à la fréquence utile, et pour les convertir en un deuxième signal de vibrations représentant des vibrations du tube de mesure, notamment de telle sorte qu'une différence de phase correspondant à un débit massique d'un produit s'écoulant dans le canal intérieur du tube de mesure puisse être mesurée entre le premier et le deuxième signal de capteur.

6. Transducteur selon l'une des revendications précédentes,
- pour lequel la fréquence utile est variable à l'intérieur d'un intervalle de fréquence utile, notamment en raison des variations dans le temps d'une densité d'un produit s'écoulant dans le canal intérieur du tube de mesure ;
- et pour lequel l'intervalle de fréquence utile présente une limite d'intervalle inférieure, définie par une valeur de fréquence minimale non dépassée vers le bas par la fréquence utile.

7. Transducteur selon la revendication précédente,
- pour lequel les vibrations utiles du tube de mesure présentent, notamment de manière précise, quatre noeuds de vibration ou, notamment de manière précise, trois ventres de vibration situés notamment dans au moins un plan de projection imaginaire du transducteur sur un axe de vibration imaginaire reliant de manière imaginaire la première extrémité du tube et la deuxième extrémité du tube.

8. Transducteur selon l'une des revendications précédentes,
- pour lequel l'élément élastique présente une première extrémité (C+) reliée au tube de mesure, notamment en un point de fixation (c') situé sur une ligne périphérique circulaire imaginaire du tube de mesure touchant également le premier composant d'excitation et/ou de manière rigide ; et
- pour lequel l'élément élastique présente une deuxième extrémité (C#) reliée au premier élément de support, notamment en un point de fixation (c") espacé latéralement du deuxième composant d'excitation et/ou de manière rigide.

9. Transducteur selon l'une des revendications précédentes, pour lequel le tube de mesure et le deuxième élément de support sont conçus pour réagir à une vibration parasite pouvant être transmise de l'extérieur à la fois au tube de mesure et au deuxième élément de support via le premier élément de support, notamment via la première extrémité de support du premier élément de support et/ou via la deuxième extrémité de support du premier élément de support, laquelle vibration présente une fréquence parasite - correspondant notamment à la fréquence de résonance du mode utile - par une vibration parallèle, à savoir respectivement par une vibration ne modifiant pas une distance entre le premier et le deuxième composant de capteur et présentant respectivement une fréquence correspondant à la fréquence parasite.

10. Transducteur selon l'une des revendications précédentes,
- pour lequel la première extrémité du premier élément de support et la première extrémité du deuxième élément de support sont reliées de manière rigide l'une à l'autre, à savoir d'une manière qui empêche les mouvements relatifs de la première extrémité du premier élément de support et de la première extrémité du deuxième élément de support, et
- pour lequel la deuxième extrémité du premier élément de support et la deuxième extrémité du deuxième élément de support sont reliées de manière rigide l'une à l'autre, à savoir d'une manière qui empêche les mouvements relatifs de la deuxième extrémité du premier élément de support et de la deuxième extrémité du deuxième élément de support.

11. Transducteur selon l'une des revendications précédentes,
- pour lequel la première extrémité du premier élément de support est reliée de manière également rigide à la première extrémité du tube de mesure ainsi qu'à la première extrémité du deuxième élément de support, et
- pour lequel la deuxième extrémité du premier élément de support est reliée de manière également rigide à la deuxième extrémité du tube de mesure ainsi qu'à la deuxième extrémité du deuxième élément de support.

12. Transducteur selon l'une des revendications précédentes,
- pour lequel la première extrémité du premier élément de support est reliée mécaniquement à la première extrémité du tube de mesure et à la première extrémité du deuxième élément de support d'une manière qui empêche les mouvements de la première extrémité du tube de mesure par rapport à la première extrémité du deuxième élément de support, et
- pour lequel la deuxième extrémité du premier élément de support est reliée mécaniquement à la deuxième extrémité du tube de mesure et à la deuxième extrémité du deuxième élément de support d'une manière qui empêche les mouvements de la deuxième extrémité du tube de mesure par rapport à la deuxième extrémité du deuxième élément de support.

13. Transducteur selon l'une des revendications précédentes,
- pour lequel le tube de mesure et le deuxième élément de support s'étendent parallèlement l'un à l'autre, notamment de telle sorte qu'une distance minimale entre le tube de mesure et ledit élément de support est constante au moins sur une zone s'étendant entre le premier capteur de vibrations et l'excitateur de vibrations ; et/ou
- pour lequel le tube de mesure est au moins partiellement courbé en forme de S ou de Z et/ou au moins partiellement droit ; et/ou
- pour lequel le deuxième élément de support est au moins partiellement courbé en forme de S ou de Z et/ou au moins partiellement droit ; et/ou
- pour lequel le deuxième élément de support est formé au moyen d'un tube cylindrique avec une paroi de tube et un canal intérieur entouré par la même paroi de tube, notamment de telle sorte que le canal intérieur du tube de mesure et le canal intérieur du tube formant le deuxième élément de support sont de même taille, et/ou qu'une épaisseur de la paroi du tube formant le deuxième élément de support et l'épaisseur de la paroi du tube de mesure sont de même taille.

14. Transducteur selon l'une des revendications précédentes,
- pour lequel le tube de mesure présente un centre de symétrie par rapport auquel le tube de mesure est à symétrie ponctuelle ;
- pour lequel le deuxième élément de support présente un centre de symétrie par rapport auquel le deuxième élément de support est à symétrie ponctuelle ;
- et pour lequel le centre de symétrie du tube de mesure et le centre de symétrie du deuxième élément de support coïncident au moins dans un plan de projection imaginaire du transducteur s'étendant entre le tube de mesure et le deuxième élément de support, notamment parallèlement au tube de mesure et/ou au deuxième élément de support.

15. Système de mesure, notamment destiné à la mesure d'un débit massique et/ou d'un flux massique d'un produit s'écoulant dans une conduite, lequel système comprend : un transducteur selon l'une des revendications précédentes ainsi qu'une électronique de mesure et d'exploitation raccordée électriquement audit transducteur.
